(19)

**Europäisches Patentamt**
**European Patent Office**
**Office européen des brevets**

(11) **EP 4 313 336 B1**

(12) **EUROPEAN PATENT SPECIFICATION**

(45) Date of publication and mention
of the grant of the patent:
**30.04.2025 Bulletin 2025/18**

(21) Application number: **22714210.6**

(22) Date of filing: **18.03.2022**

(51) International Patent Classification (IPC):
*A63F 13/355* (2014.01)    *A63F 13/358* (2014.01)
*A63F 13/335* (2014.01)    *A63F 13/77* (2014.01)
*H04N 21/478* (2011.01)    *H04L 65/80* (2022.01)
*H04N 19/10* (2014.01)

(52) Cooperative Patent Classification (CPC):
**A63F 13/355; A63F 13/335; A63F 13/358;**
**A63F 13/77; H04L 65/61; H04L 65/65; H04L 65/80;**
**H04N 21/2625; H04N 21/6375; H04N 21/6547**

(86) International application number:
**PCT/EP2022/057178**

(87) International publication number:
**WO 2022/200215 (29.09.2022 Gazette 2022/39)**

(54) **METHOD, APPARATUSES AND SYSTEMS DIRECTED TO QUALITY OF EXPERIENCE IMPROVEMENT IN CLOUD GAMING**

VERFAHREN, VORRICHTUNGEN UND SYSTEME IN BEZUG AUF DIE VERBESSERUNG DER ERFAHRUNGSQUALITÄT BEIM CLOUD-SPIELEN

PROCÉDÉ, APPAREILS ET SYSTÈMES VISANT À AMÉLIORER LA QUALITÉ D'EXPÉRIENCE DANS UN JEU EN NUAGE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **22.03.2021 EP 21305349**

(43) Date of publication of application:
**07.02.2024 Bulletin 2024/06**

(60) Divisional application:
**25155302.0 / 4 525 440**

(73) Proprietor: **InterDigital CE Patent Holdings, SAS**
**75017 Paris (FR)**

(72) Inventors:
• **SALMON-LEGAGNEUR, Charles**
**35576 Cesson-Sevigne (FR)**
• **TAIBI, Charline**
**35576 Cesson-Sevigne (FR)**
• **AUMONT, Franck**
**35576 Cesson-Sevigne (FR)**

• **GEGOUT, Adrien**
**35576 Cesson-Sevigne (FR)**

(74) Representative: **Interdigital**
**Immeuble ZEN 2**
**845 A, avenue des Champs Blancs**
**35510 Cesson-Sévigné (FR)**

(56) References cited:
**US-A1- 2013 298 178**

• **MOHAN ANUP ET AL: "Adaptive Resource Management for Analyzing Video Streams from Globally Distributed Network Cameras", IEEE TRANSACTIONS ON CLOUD COMPUTING, IEEE COMPUTER SOCIETY, USA, vol. 9, no. 1, 15 May 2018 (2018-05-15), pages 40 - 53, XP011842810, DOI: 10.1109/TCC.2018.2836907**

**(Cont. next page)**

- CHU DAVID DAVIDCHU@MICROSOFT COM ET AL: "Prime a framework for co-located multi-device apps", PROCEEDINGS OF THE 2015 ACM INTERNATIONAL JOINT CONFERENCE ON PERVASIVE AND UBIQUITOUS COMPUTING, ACMPUB27, NEW YORK, NY, USA, 7 September 2015 (2015-09-07), pages 203 - 214, XP058511885, ISBN: 978-1-4503-3572-0, DOI: 10.1145/ 2750858.2806062

## EP 4 313 336 B1

### Description

#### 1. TECHNICAL FIELD

The present disclosure relates to the cloud gaming domain, which may also be referred to as game streaming, and more particularly to quality of experience (QoE) in cloud gaming.

#### 2. BACKGROUND ART

In cloud gaming, an end user device may not run the game executable program, which may be run on a server (e.g., instance). The server instance may be located in a data center (operated e.g., by a cloud provider or by any kind of operator). In cloud gaming, the user experience of the game may vary depending on different factors such as e.g., any of network latency, server load and game complexity. The present disclosure has been designed with the foregoing in mind. Prior art in the field of adaptive video streaming is disclosed in MOHAN ANUP ET AL: "Adaptive Resource Management for Analyzing Video Streams from Globally Distributed Network Cameras", IEEE TRANSACTIONS ON CLOUD COMPUTING, IEEE COMPUTER SOCIETY, USA, vol. 9, no. 1, 15 May 2018.

#### 3. SUMMARY

The invention is defined in the appended claims. Methods, apparatuses, systems, etc., directed to QoE improvement in cloud gaming are disclosed herein. In an embodiment, a method for improving a QoE of video content (such as e.g., a game) may be implemented in a client device. For example, the client device may receive, from a server, a plurality of packets carrying video frames of the video content. For example, the client device may apply an initial (e.g., secure reliable transport (SRT)) latency value to the received packets before decoding and displaying. For example, the client device may send a request message to the server. For example, the request message may comprise first information indicating a new latency value based on a frame pace variation. For example, the client device may receive a response message from the server, the response message comprising second information indicating a new latency value. For example, the client device may apply the new SRT latency value to received subsequent packets before decoding and displaying (e.g., the subsequent packets).

Although various embodiments are described and/or claimed herein in which an apparatus, system, device, etc. and/or any element thereof is configured to carry out an operation, process, algorithm, function, etc. and/or any portion thereof, it is be understood that any embodiments described and/or claimed herein assume that any apparatus, system, device, etc. and/or any element thereof carries out any operation, process, algorithm, function, etc. and/or any portion thereof (and vice versa).

#### 4. BRIEF DESCRIPTION OF THE DRAWINGS

A more detailed understanding may be had from the following description, given by way of example in conjunction with the accompanying drawings. Figures in such drawings, like the detailed description, are examples. As such, the Figures and the detailed description are not to be considered limiting, and other equally effective examples are possible and likely. Furthermore, like reference numerals in the figures indicate like elements.

- **Figure 1** is a system diagram illustrating an example of a high-level architecture of game streaming;
- **Figure 2** is a system diagram illustrating an example of video streaming in a cloud gaming architecture;
- **Figure 3** is a diagram illustrating an example of a latency window operation in a SRT latency buffer;
- **Figure 4** is a diagram illustrating an example of an acknowledge operation in SRT;
- **Figure 5** is a diagram illustrating an example of receiver and sender buffer latencies after a SRT extended handshake procedure;
- **Figures 6A** and **6B** are two diagrams illustrating two examples of an inter-frame delay variation metric;
- **Figure 7** is a system diagram illustrating an example of a cloud gaming system based on SRT;
- **Figure 8A** is a diagram illustrating two examples of extended handshake packet formats;
- **Figure 8B** is a diagram illustrating an example of handshake extension message flags;
- **Figure 9A** and **9B** are two diagrams illustrating two examples of an extended handshake message exchange for indicating a capability to support latency dynamic change;
- **Figure 10** is a diagram illustrating an example of a format of a SRT message for requesting a new SRT latency value;
- **Figures 11A** and **11B** are two diagrams illustrating two examples of a message exchange for a dynamic latency change procedure respectively initiated by the client device and by the server;
- **Figure 12A** is a diagram illustrating an example of a client processing device 12A for improving a QoE of a game;

- **Figure 12C** is a diagram illustrating an example of a server processing device 12C for improving a QoE of a game;

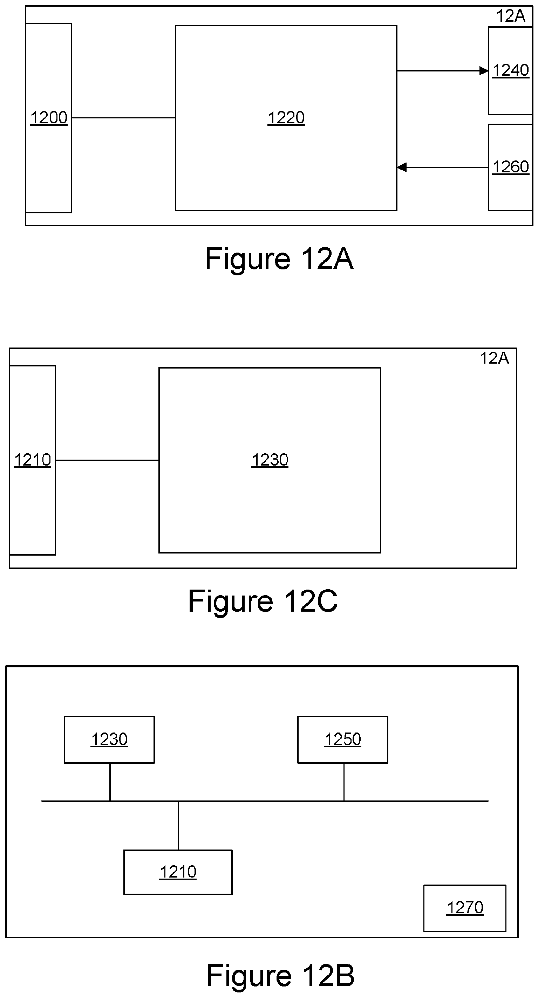

- **Figure 12B** represents an example of an architecture of any of the client and the server processing device of Figures 12A and 12C;

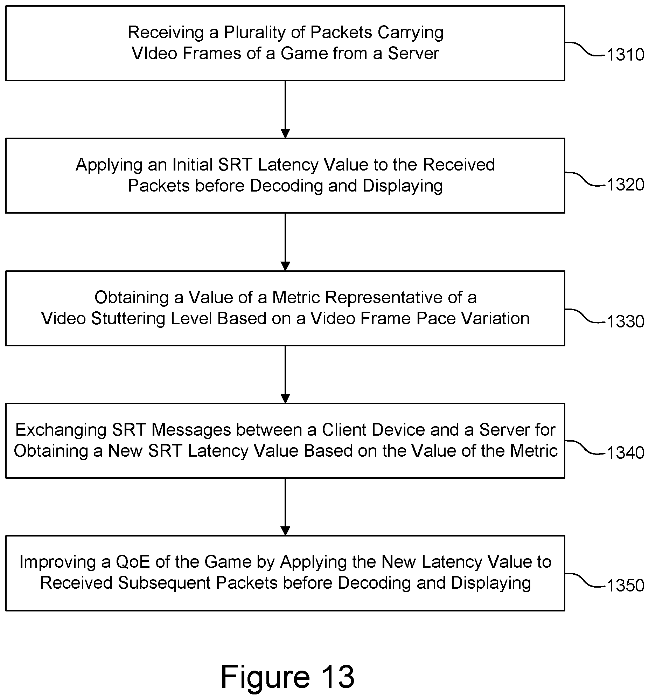

- **Figure 13** is a diagram illustrating an example of a method for improving a QoE of a game;

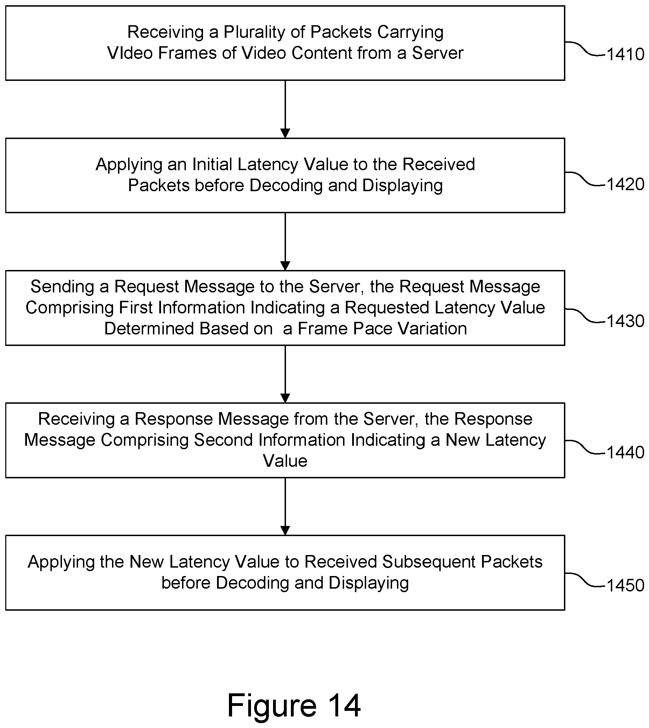

- **Figure 14** is a diagram illustrating a first example of a method implemented in a client device e.g., for improving a QoE of video content;

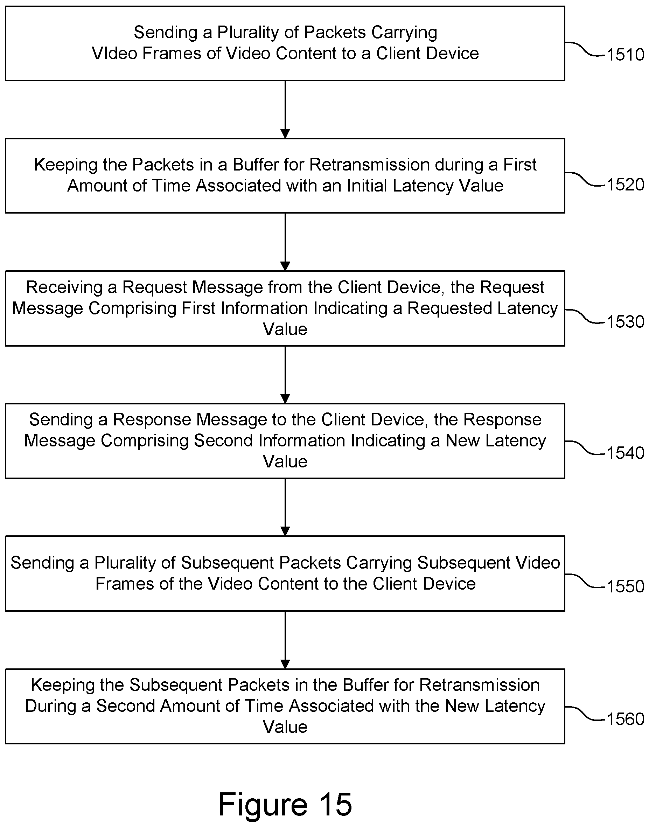

- **Figure 15** is a diagram illustrating a second example of a method implemented in a server e.g., for improving a QoE of video content;

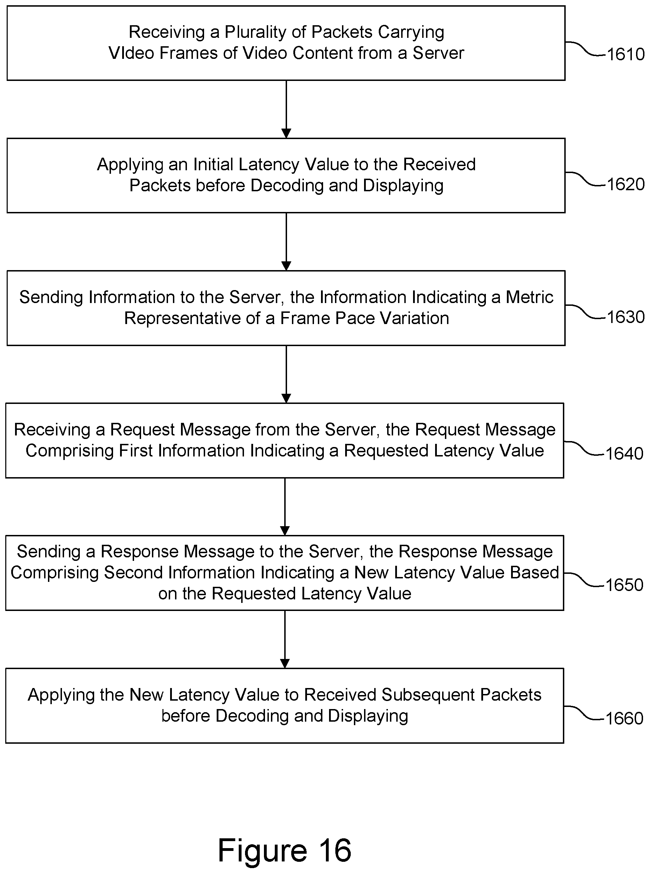

- **Figure 16** is a diagram illustrating a third example of a method implemented in a client device e.g., for improving a QoE of video content; and

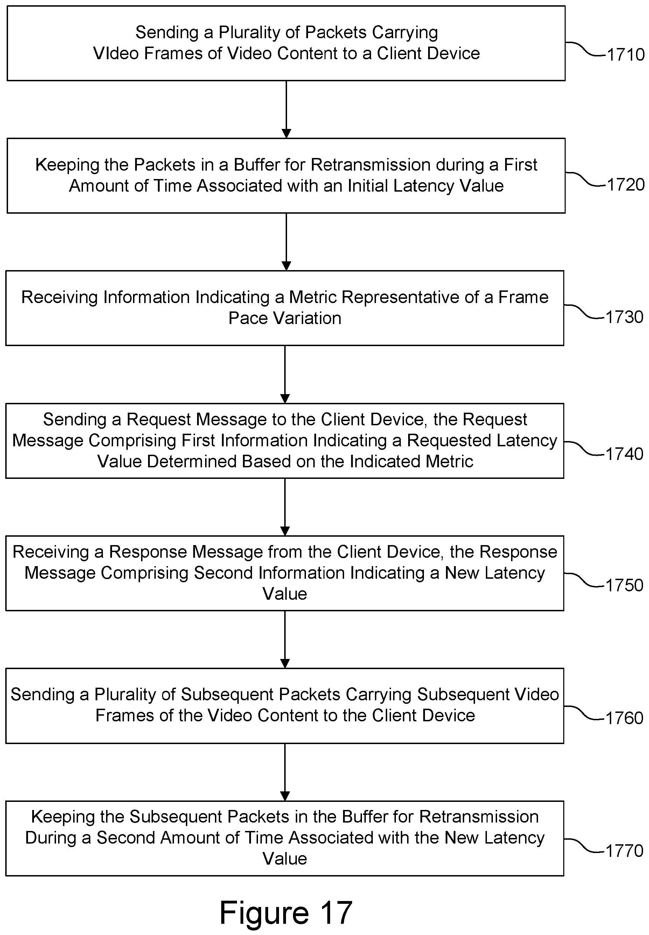

- **Figure 17** is a diagram illustrating a fourth example of a method implemented in a server e.g., for improving a QoE of video content.

It should be understood that the drawing(s) are for purposes of illustrating the concepts of the disclosure and are not necessarily the only possible configuration for illustrating the disclosure.

5. DESCRIPTION OF EMBODIMENTS

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the term " interconnected " is defined to mean directly connected to or indirectly connected with through one or more intermediate components. Such intermediate components may include both hardware and software based components. The term "interconnected" is not limited to a wired interconnection and also includes wireless interconnection.

All examples and conditional language recited herein are intended for educational purposes to aid the reader in understanding the principles of the disclosure and the concepts contributed by the inventor to furthering the art and are to be construed as being without limitation to such specifically recited examples and conditions.

Moreover, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Embodiments described herein are related to cloud gaming which may also be referred to as game streaming. Cloud gaming may be seen as the concept of executing a game on a (e.g., remote) server, (which may be referred to herein as any of a "game server", and a "server", collectively "server") sending the result as a video stream to an end-user device, which may be referred to herein as any of a "cloud gaming client", a "thin client device", a "client game device", collectively "client device". The game server and the client device may be interconnected via any type of network. For example, the server may be located in the cloud and the game may be running on any (e.g., type of) instance of a server.

For the sake of simplicity, embodiments are described herein by referring to a game (e.g., streaming) as an example of video content (e.g., streaming). Embodiments described herein are not limited to game streaming and may be applicable to any kind of video content streaming. Throughout embodiments described herein the terms "game" and "video content" may be used interchangeably.

For the sake of simplicity, embodiments are described herein by referring to the secure reliable transport (SRT) protocol and its associated SRT latency. The SRT protocol (e.g., and the SRT latency) are only examples of a protocol (e.g., and latency) that may be applicable to embodiments described herein. Any transport protocol and any kind of latency (e.g., management system) capable to reproduce at the client device a rate (e.g., a time sequence) of packets (e.g., data, video frames) that may be similar to (e.g., representative of) the rate (e.g., time sequence) of packets (e.g., data, video frames) that may have been generated at the server, may be applicable to embodiments described herein. The terms "SRT (e.g., request, response, handshake) message" and "(e.g., request, response, handshake) message" may be used interchangeably throughout embodiments described herein. The terms "SRT latency" and "latency" may be used interchangeably throughout embodiments described herein.

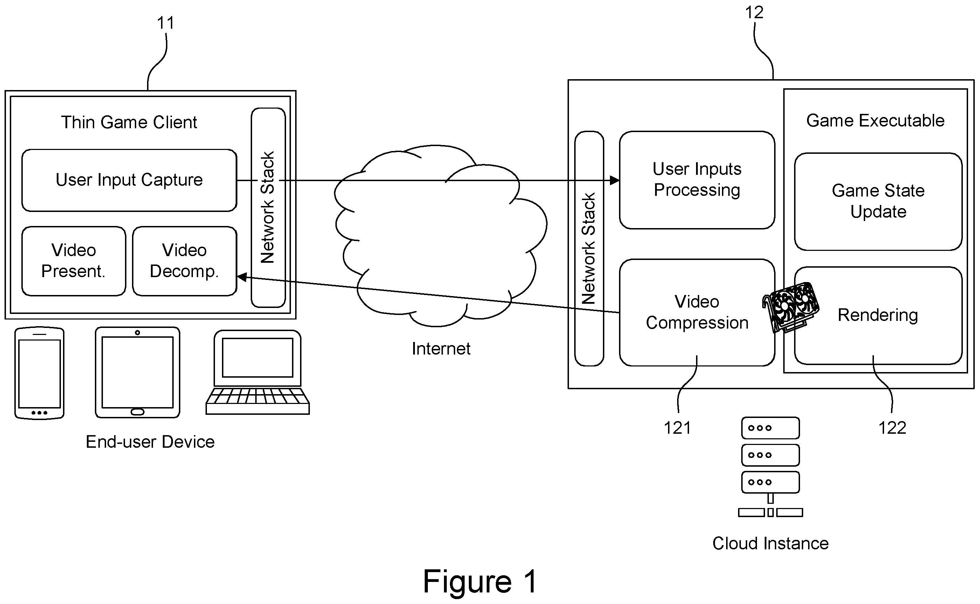

**Figure 1** is a system diagram illustrating an example of a high-level architecture of game streaming. The client device 11 may not run the game executable, which may be running on (e.g., a dedicated instance of) the server 12. The server (e.g., instance) may be located, for example, in a data center (that may be operated e.g., by any of cloud provider and an operator). The server 12 may include (e.g., performant) hardware such as e.g., a graphics processing unit (GPU). For example, the server 12 may obtain (e.g., capture) images (e.g., of a scene of the game) rendered 122 by the GPU at a (e.g., given capture) rate (e.g., 60 frames per second (FPS)). The obtained (e.g., captured) images may result in a flow of video frames, that may be encoded 121 into a (e.g., live) video stream that may be sent (e.g., transmitted) to the client device 11. The video stream may comprise a plurality of packets carrying (e.g., encoded) video frames of the game. On the client device 11, a thin game client application may receive (e.g., listen to) this video stream, may decode frames as they may be received and may present (e.g., display) them to the client device 11 screen.

The client device 11, by performing (e.g., only) these few operations may be lightweight (include limited processing resources). The term "video stream" is used to designate the set of video (e.g., encoded) frames of the game that may be transmitted by the game server to the client device, e.g., as a plurality of packets including e.g., any of a transport layer overhead and (e.g., corresponding) metadata.

In cloud gaming, the quality of experience (QoE) may depend on any of objective and subjective factors. For example, the QoE may depend on any of a responsiveness to user commands (e.g., response time, latency) and a presence or not of video stuttering, which may also be referred to as video smoothness.

Video smoothness may be an important subjective factor impacting the QoE, that may appear as important as the response time, or the visual quality, for which the user may be tolerant or may adapt. Video stuttering (e.g., lack of smoothness) may occur, for example, in a case where any number of frames are any of dropped and duplicated in the client device (which may be visible on the client screen). A frame duplication (e.g., rendering a same frame twice) may occur, for example, in a case where the next frame to be displayed may not be received, decoded and displayed in time (e.g., for example due to an increased latency). Similarly, a frame drop (e.g., skipping, not decoding, not displaying the frame) may occur, for example, in a case where the receiving buffer of the client device is full (e.g., for example, due to an arrival of burst data) and some frames may be deleted. A frame that may be deleted (e.g., due to a client buffer being full) may no longer be received, e.g., in a case where server retransmission is no longer possible for that frame.

In cloud gaming, the regularity (e.g., constancy) of the rate at which video frames of the game may be received by (e.g., delivered to) the client device may be affected (e.g., impacted) by any number of (e.g., changing) conditions (e.g., factors) such as e.g., any of network (e.g., changing) constraints, encoding variability, availability of server resources e.g., linked to the number of game executables that may be running on the server instance (e.g., any of disk I/O accesses, CPU, GPU and encoder function sharing, ), complexity of the scene at a given time, etc... For example, on the client device screen, some video stuttering may occur due to e.g., an overflow (respectively an underflow) of frames (in a memory buffer of the client device) which may force the client device to drop (resp. to duplicate) some of them, which may alter (e.g., degrade) the pace (e.g., rate regularity) of the rendered video.

In cloud gaming, a client device may include a memory buffer for buffering video on reception for e.g., hundreds of milliseconds before the video may be rendered on screen. Video stuttering issues may be reduced (e.g., removed) by increasing the size (e.g., time) of the memory buffer which may increase the overall cloud gaming latency, which may be seen as an important factor for the QoE. There may be a compromise (e.g., a balance) to be estimated by keeping both a low (e.g., minimum) value of the cloud game latency and a low level of (e.g., no) video stuttering.

As (e.g., live, real) conditions may be continually evolving during the game session, there may be a high value of any of sporadic and long duration variation of the jitter in the client device. Embodiments described herein may allow to (e.g., regularly, repeatedly) adjust the balance (e.g., between increasing the latency and reducing the video stuttering) enabling the server and the client device to remain (e.g., properly) synchronized.

**Example of Cloud Gaming Latency**

In cloud gaming high responsiveness may allow to (e.g., quickly) adapt the streamed content to the actions of the user. The term **"cloud gaming latency"** may be used to refer to the delay between a user's action in the game and its effect on the display. The cloud gaming latency may include:

- a round trip time delay (RTT), which may be seen as the network transport delay between a first time when a packet may be sent by the client device and a second time when a response packet may be received from the server. A RTT may vary over time, depending on e.g., current network conditions, congestions issues etc.
- a processing delay, which may be seen as a time for the server to encode the frame. This time may depend on the resource management on server side.
- a playout delay, which may be seen as a time for the client device to decode the frame and present (e.g., display) it on screen.
- a **queuing delay,** which may be seen as a time spent in internal buffers inside the reception protocol stack, before received packets may be delivered to the application for play out. The dimensioning of buffering may be a setting, that may be any of pre-configured and chosen (e.g., determined) at start-up and. For example, the dimensioning of buffering may be negotiated between server and the client device.

The cloud gaming latency may be kept at a low value to allow an enjoyable user experience in gaming. For example, a cloud gaming latency that may remain between 100 and 150 milliseconds may allow to provide an enjoyable user experience, for example, for first person shooter games.

**Example of Video Streaming in Cloud Gaming**

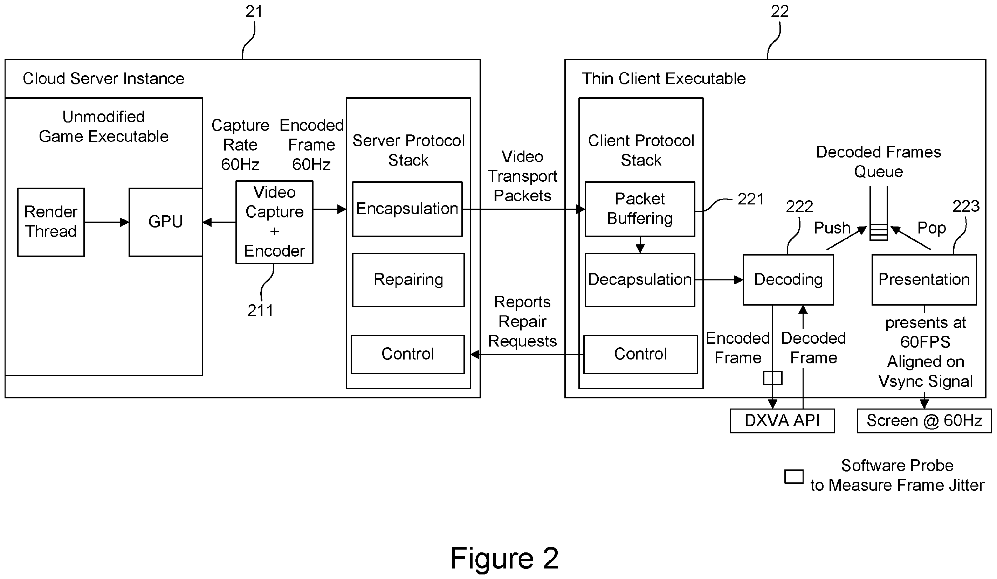

**Figure 2** is a system diagram illustrating an example of a video streaming in a cloud gaming architecture. On the server 21, a video capturing and encoding processing module 211 may be configured to capture a frame(s) rendered by the game at a target rate (e.g., 60Hz). A new encoded frame may be encoded by the processing module 211 and may be output at the same target rate. An (e.g., each) encoded frame may be transported to the client device 22 using a reliable streaming protocol above any of the user datagram protocol (UDP) and the transport control protocol (TCP). Examples of reliable streaming protocols may include, for example, any of the web real time communication protocol (WEBRTC), e.g., for Stadia, and the real time protocol (RTP) over UDP e.g., for GeForce Now.

For example, in a live video system, the transport may be impacted by any of congestion, packets losses, reordering and jitters. Any of packet late arrival and packet losses may produce any of video stuttering, video freezes and visual impairments. The protocol stack (e.g., network delivery system) may compensate (e.g., attenuate) these effects to improve the QoE by any of the following techniques:

- A buffer 222 of packets may be used to e.g., absorb network (e.g., time delivery) fluctuations;
- redundancy of information, such as forward error correction (FEC) may be used to improve the transmission reliability;
- a repairing mechanism may be used, by e.g., requesting the server to retransmit packets that may have been detected as corrupted or missing by the receiver (such as the secure and reliable transport protocol (SRT).

There may be video streaming techniques that may use an important buffering, for example, measured in seconds, that may drastically increase the queuing delay and the global cloud latency. These techniques may not be applicable to cloud gaming and its corresponding (e.g., ultra-low) latency (<150ms) expectations, for which, the video buffering may be reduced.

According to embodiments, the client device 22 may receive (e.g., through the network protocol stack) packets (e.g., carrying video frames) that may be buffered (e.g., stored in a receiver buffer 221) queue before they may be delivered to the application for decoding 222 and presentation (e.g., display) 223. For example, the packets may be stored in the buffer 221 for a (e.g., maximum) time limit. For example, the decoding processing module 222 may leverage (e.g., any) HW acceleration available on the client device to decode the frame(s). As examples, GeForce Now and Stadia may use DirectX video acceleration (DXVA2). Decoded video frames may be presented to (e.g., displayed on) the screen, synchronized to a periodic video synchronization signal (at e.g., 60Hz) (which may be referred to herein as $V_{Sync}$), for example, in order to avoid any tearing effects.

For example, due to any reason (such as e.g., any of packet jitter, packet error and reparation etc.), a video frame may be decoded (e.g., too) late and may be available to the presentation module 223 sometime (e.g., a few milliseconds) after the $V_{Sync}$ deadline time. In such a case, the previous video frame may be presented (e.g., displayed) for two $V_{Sync}$ periods on screen, and the last decoded one may be postponed to the next $V_{Sync}$ period (e.g., 16.66ms later). In a case where this process is repeated for (e.g., several, all) occurrences of missed (e.g., late) frames, the delay between presented (e.g., displayed) video frames on screen and produced (e.g., encoded) video frames by the server may accumulate over time and may shift. For example, (e.g., at some point in time), the client device may resynchronize with the video source (e.g., encoding rate) by skipping any number of (e.g., too) late decoded video frames and present (e.g., display) the last received one. For example, the sequence of displayed video frames may not be strictly identical to the sequence of captured video frames, as they may include any of repeated frames and skipped frames, which may be a cause of video stuttering.

For example, disabling $V_{Sync}$ (which may create a risk of tearing) may not prevent video stuttering to occur. In a case where the inter delay between (e.g., successive) decoded frame is not constant, video frames may not be displayed for the same amount of time, which may create some video stuttering.

**SRT Protocol Example**

The secure reliable transport protocol (SRT) is an example of streaming protocol that may be used for cloud gaming.

SRT was initially developed internally by a video streaming company (Haivision) to address video streaming applications. SRT is supported through the SRT Alliance, founded by Haivision and Wowza. SRT may also be available as an internet engineering task force (IETF) draft "The SRT protocol draft-sharabayko-mops-srt-01" published the 9th September 2020.

Based on UDP-based Data Transfer (UDT) protocol, a SRT packet may include a SRT header, which may include information indicating any of a packet number, a message number, a time stamp, a destination socket identifier, etc. A SRT packet may be of different types, such as e.g., a control type (for control packets) and a data type (for data packets). Control packets may be used for any of session management, acknowledgment, etc. Data packets may be used to deliver the stream data (e.g., packets carrying video / audio frames).

According to embodiments, SRT may allow to timely deliver packets to the application. For example, SRT may allow to send packet to the application at a timing corresponding to the timing at which packets may have been ingested in SRT.

According to embodiments, SRT may allow to not retransmit late packets. For example, SRT may be able to identify packets that may be too late for being successfully and timely delivered to the application, and to stop retransmitting them.

According to embodiments, SRT may allow to (e.g., regularly, repeatedly) estimate RTT using an ACK and ACKACK mechanism.

**SRT Buffer Latency Example**

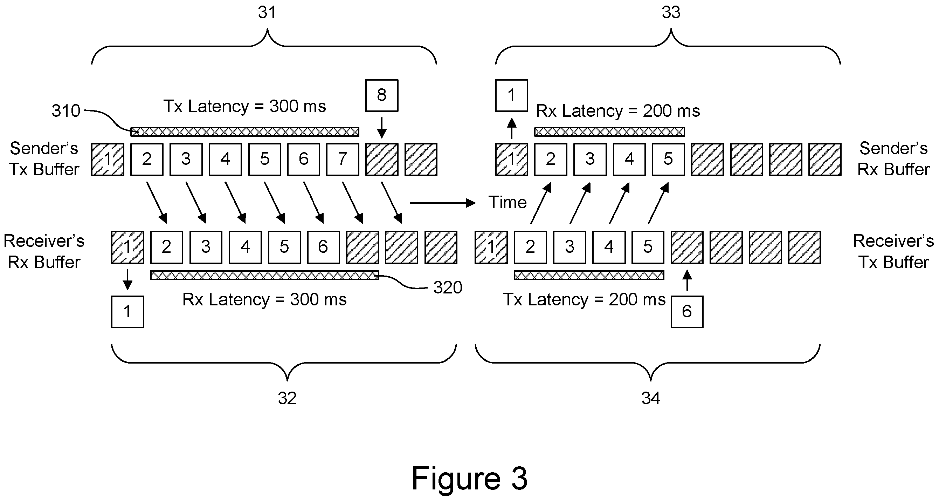

**Figure 3** is a diagram illustrating an example of a latency window operation in a SRT latency buffer. For example, a (e.g., game) server may include a sender Tx buffer 31 and a sender Rx buffer 33. For example, a client device may include a receiver Rx buffer 32 and a receiver Tx buffer 34. The sizes of the server and the client device buffers 31, 32 may correspond to windows 310, 320 inside the buffers 31, 32 and may be referred to herein as latency windows. For example, latency windows 310, 320 of a same length for the server sender Tx buffer 31 and the client device receiver Rx buffer 32 may be negotiated between the server and the client device during the SRT extended handshake e.g., during the session establishment, as described herein.

At the server side, a (e.g., circular) latency buffer 31 may be used to store the SRT packets obtained from the fragmentation of the encoded video frames obtained from the video encoder. For example, the SRT packets may be kept in the (e.g., circular) latency buffer 31 for retransmission during an amount of time associated with a SRT latency value. These packets may be timestamped, for example, relative to the creation time of the SRT session (e.g., relative to the time the SRT session may have been established). For example, a time value may be initialized at the creation of the SRT session and may be incremented based on a (e.g., system) clock. The (e.g., system) clock may be a steady clock, which may be based on e.g., a measure of the number of CPU-cycles elapsed from the start of SRT session. For example, a (e.g., each) packet may include time stamp information indicating a time associated with a storage of the packet in the server sender Tx buffer 31. For example, the time stamp information may indicate the packet send time (e.g., when the packet has been transmitted (e.g., for the first time) to the client device. In another example, the time stamp information may indicate the packet origin time (e.g., when the packet has been created and stored (e.g., inserted) in the sender Tx buffer 31 (e.g., any of before, after and at the (e.g., first) transmission time). Time stamp information corresponding to the time values at which different packets may have been obtained from the encoder (e.g., and stored in the server sender Tx buffer 31) may be inserted in the packets. The different packets (e.g., with different times indicated by the timestamp information) may remain in the buffer for a (e.g., limited) amount of time. For example, a packet may remain in the buffer up to an acknowledge (ACK) may have been received for that packet. For example, the packet may remain in the buffer up to (e.g., a time corresponding to) the end of the sender latency window (SLW)). In a case where the reception of a packet has not been acknowledged by the client device (e.g., within a timeout) and the time indicated by the timestamp information of the packet remains in the SLW, the packet may be retransmitted by the sender. Otherwise (e.g., if the time stamp information of the packet indicates that the packet is stored in the buffer for more than the SLW), the packet may be dropped, and the server may stop retransmitting the packet. Stopping retransmitting late packets may allow to avoid useless transmissions because the packet, not being anymore in the receiver latency window (RLW) on the client side may not be decoded in time for being displayed.

At the client device side, a receiver latency buffer 32 may be used to store (e.g., hold) received packets, for example, until a time to deliver them to the application (for decoding and rendering) may occur. For example, packets may be extracted from the receiver latency buffer 32, for being decoded, based on a comparison between the time indicated by the time stamp information included in the packets and a (e.g., local, system) time. For example, a packet may be extracted for being decoded after a (e.g., constant) amount of time that may have elapsed between the time the packet may have been inserted in the sender latency buffer 31 of the server (e.g., transmitted for the first time) and the time the packet may be extracted from the receiver latency buffer 32 of the client device after successful reception by the client device. The (e.g., constant) amount of time may be constant at least for a set of successive (e.g., consecutive) packets. The (e.g., constant) amount of time may be associated with a SRT latency value. For example, the (e.g., constant) amount of time may correspond to at least the sum of the SRT latency value and an initial value representative of the RTT (e.g., such as half of the initial RTT (e.g., which may be measured during the SRT handshake exchange)). The packet timestamps may allow to reflect, at the receiver side the pace (e.g., timing) at which packets may have been generated (e.g., by the encoder) at the sender side. Reflecting the sender pace at the client device may allow to eliminate jitter for the application. This may allow the application to have small (e.g., limited) buffering. For example, the SRT receiver may reorder packets e.g., based on the packet numbering. For example, the SRT receiver may detect missing packets, e.g., based on holes (e.g., discontinuity) in the sequence of packet numbers. For example, any number of missing packets may be reported by transmitting a non-acknowledge packet (which may be referred to herein as NAK) to the server, which may trigger their re-transmission. After (e.g., reordered) packets may have been delivered to the application, the client device may send an acknowledge packet (which may be referred to herein as ACK). For example, any of ACK and NAK may be sent on a regular and configurable interval basis (e.g., 10ms).

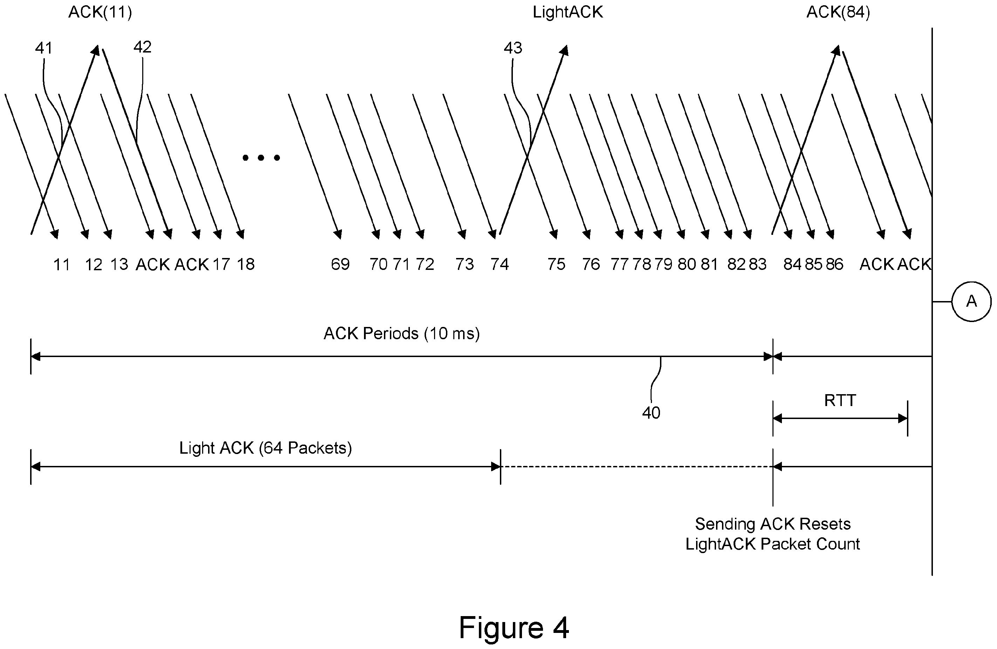

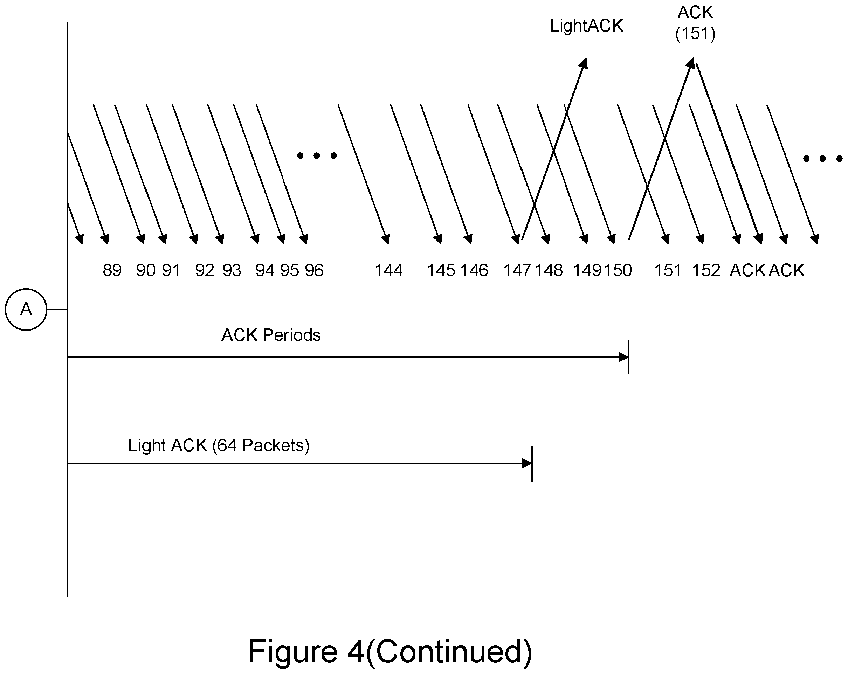

**Figure 4** is a diagram illustrating an example of an acknowledge operation in SRT. An ACK message 41 may be transmitted by a SRT receiver to trigger the transmission of an ACKACK message 42 by a SRT sender to allow the SRT receiver to compute the RTT (e.g., and any RTT variance value). For example, in a case where the number of transmitted packets is high within an ACK period 40, a light ACK 43 message may be transmitted to acknowledge packets, e.g., without triggering any ACKACK transmission and RTT measurement.

According to embodiments, in a case where a packet has not been received in time for delivering the packet to the application (e.g., for decoding and displaying), no further attempt to (re)transmit the packets may be operated by the server. For example, the packet may be considered as not been received in time in a case where it is received after its expected extraction time (e.g., corresponding to the (e.g., constant) amount of time after the time indicated in the time stamp information, the (e.g., constant) amount of time being associated with the SRT latency value). In the case where the packet has not been received in time, the client device (e.g., receiver stack) may advance its receiver latency window in a same way as if the packet had been received. Similarly, the server may advance its sender latency window as if the packet had been successfully transmitted.

According to embodiments the (e.g., receiver, sender) latency windows may allow to provide a (e.g., predictable and) bounded latency. For example, a reduced latency may be obtained at the risk of losing more packets, depending on the network conditions.

**SRT Extended Handshake Example**

SRT may include a SRT extended handshake process (which may be referred to herein as HSv5). The SRT extended handshake process may be included in the second part of a SRT caller-listener handshake. The SRT extended handshake may allow to determine at least the SRT latency value in the sending direction (which may be referred to herein as any of sender SRT latency and SndTsbPdDelay), and the SRT latency value in the receiving direction (which may be referred to herein as any of receiver SRT latency, and RcvTsbPdDelay). Both sender and receiver SRT latency information (e.g., fields) may refer to latency. As the communication may be bi-directional there may be one latency value per direction in the extended SRT handshake messages. For example, both extended handshake request (HSREQ) and response (HSRSP) messages may include sender and receiver SRT latency information (e.g., SndTsbPdDelay and RcvTsbPdDelay).

For example, the sender SRT latency may correspond to the (e.g., lowest) latency the SRT sender may expect the SRT receiver to use. For example, the receiver SRT latency may correspond to the (e.g., lowest) latency value that the receiver may apply to the received stream.

For example, the client device may send an extended handshake request (HSREQ) message to the server. The extended HSREQ message may include receiver SRT latency information indicating a (e.g., requested) receiver SRT latency value. For example, the server may send an extended handshake response (HSRSP) message to the client device. The extended HSRSP message may include sender SRT latency information indicating a (e.g., responded) sender SRT latency value. According to embodiments the server and the client device may set their respective SRT latency values in respectively the sending buffer and the receiving buffers to a same value being the highest of the two values (e.g., the requested receiver latency value and the responded sender latency value).

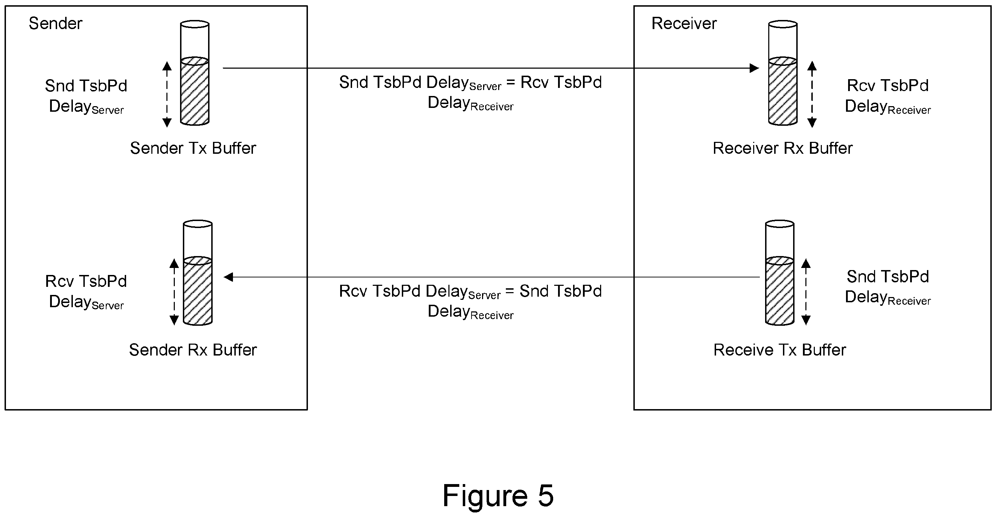

**Figure 5** is a diagram illustrating an example of receiver and sender buffer latencies after an extended SRT handshake procedure. The extended SRT handshake may allow to determine sender and receiver SRT latency values in both direction (sending and receiving directions). For example, the caller may send an extended HSREQ message, comprising first information indicating (e.g., Rx, Tx) SRT latency values on its side. The listener may calculate the highest values between SRT latency values included in the received extended HSREQ and its own values. The listener may send an extended HSRSP message comprising second information indicating the SRT latency values to be used (e.g., on both sides). In other words, the SRT (e.g., buffer) latency may be configured through the exchange of latency information during the extended handshake process between an initiator and a responder (which may be any of the server and the client device). The handshake extension message may comprise time stamp-based packet delivery (TSBPD) delay information, indicating SRT latency values in milliseconds, from both the SRT receiver and sender. The SRT latency for a connection may be established as (e.g., set to) the highest value of SRT latencies transmitted by the initiator and responder. For example, the SRT latency value may be set for the duration of the connection.

### Example of Inter-Frame Delay Variation

According to embodiments, in a cloud gaming situation, video stuttering may occur in the client device, resulting in unpleasant user experience for the user. For example, software probes may be used to track the calls to the decoding functions of the client device (e.g., such as DXVA2 API) for monitoring the delivery time of the (e.g., the packets carrying the) video frames at the output of the protocol stack. For example, the number of received encoded frames per second may be equal to the number of frames produced per second on the server. For example, although the average number of frames per second (FPS) at reception may be identical to the FPS at the server, some dispersion may be measured, for example on the inter-frame delays.

According to embodiments, a measure (e.g., metric) of the frame pace variation (e.g., such as e.g., the variation of the inter-frame delay) may be referred to herein as $Jitter_{local}$. The $Jitter_{local}$ may be obtained by dividing a jitter metric by a mean period. For example, $Jitter_{local}$ may be given by:

$$Jitter_{local} = \frac{Jitter(seconds)}{meanPeriod(seconds)}$$

The jitter metric may be defined as a sum of differences between successive interval durations, wherein an interval duration may represent the duration between a frame time and the previous frame time. For example, the jitter metric may be given by:

$$Jitter(seconds) = \sum_{i=2}^{N} \frac{|T_i - T_{i-1}|}{(N-1)}$$
$$meanPeriod(seconds) = \sum_{i=1}^{N} \frac{T_i}{N}$$

For example, $T_i$ may represent a duration of $i^{th}$ interval between a first time associated with the $i^{th}$ frame and a second time associated the preceding $(i-1)^{th}$ frame. For example, durations may be included in the jitter metric on a condition that they are comprised between 1 and 32 milliseconds (e.g., for eliminating outliers).

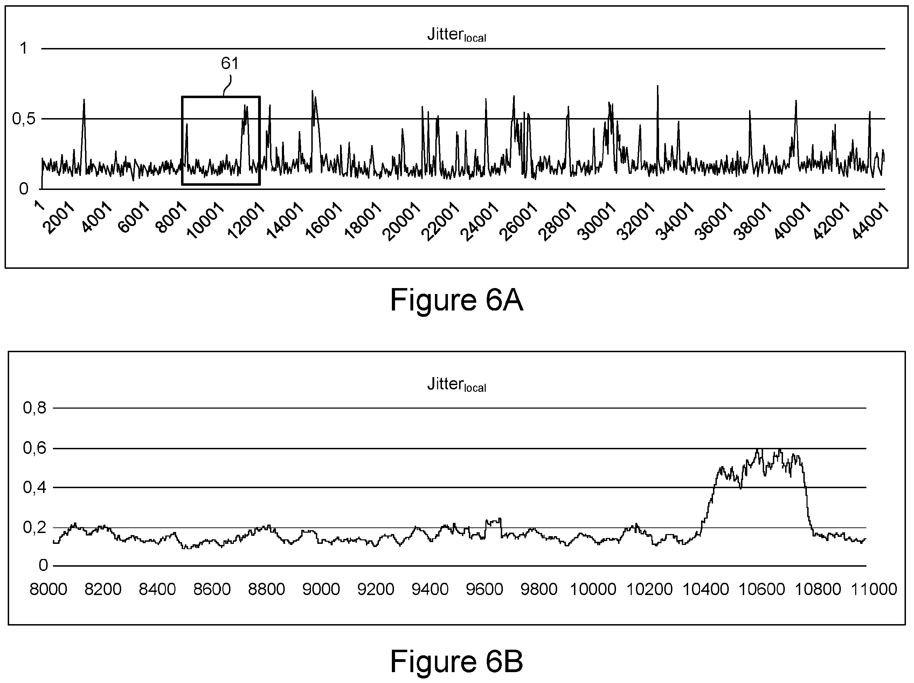

**Figures 6A** and **6B** are two diagrams illustrating two examples of an inter-frame delay variation metric ($Jitter_{local}$) measured on a client device. **Figure 6A** illustrates the inter-frame delay variation metric ($Jitter_{local}$) obtained for a game session of 13 minutes of a specific game (first person shooter game, e.g., Destiny 2) using a fibre network (e.g., 200Mbps). **Figure 6B** illustrates the inter-frame delay variation metric ($\text{Jitter}_{local}$) obtained for the same game for a zoom on a period 61 of 50 seconds.

**Example of High Value of Inter-Frame Delay Variation**

For example, service providers may operate a cloud gaming solution with an aggressive cloud gaming latency (e.g., around 120ms) which they may try to keep as small as possible. During a gaming session, a small latency value may allow to improve the reactivity to the input of the player. The (e.g., global) QoE (e.g., taking into account the latency and the video smoothness) may be scaled down due to video stuttering issues, which may make e.g., the user suffering from sickness.

As illustrated in **Figure 6A** and **Figure 6B,** the measured $\text{Jitter}_{local}$ may show a high level of inter-frame delay variation due to several phases above 0.4 with an average value of 0.2. For example, **Figure 6B** shows a sequence of $\text{Jitter}_{local}$ above 0.5 (e.g., between frames #10500 and #10750) for four seconds. A $\text{Jitter}_{local}$ value of 0.5 may represent a variation of $\pm$ 50% of the inter frame average delay. For example, for an average delay of 16.66ms (e.g., which may represent an inter-frame delay for 60 frames per second), the jitter variation may belong to [8ms - 24ms]. For example, such a variation and e.g., a $\text{Jitter}_{local}$ value above a given threshold (e.g., 0.2 in this example) may be correlated to a presence of video stuttering. The $\text{Jitter}_{local}$ value may correspond to a frequency of video stuttering occurrences, e.g., the higher the $\text{Jitter}_{local}$ value, the higher the frequency of stuttering occurrences in the video.

An inter-frame delay variation (e.g., $\text{Jitter}_{local}$) may increase for any of the following reasons:

- A first reason may be related to a variation of the network conditions (e.g. variation of the RTT, occurrence of any of congestions and network errors that may delay the availability of video frame(s) by the amount of time associated with the error (e.g., loss) recovery.
- A second reason may be related to a variation of the server conditions that may affect any of the capture rate, the encoding rate and the emission of the (e.g., packets carrying the) video frames. Any of encoding parameters (e.g., compression by zone of interest), type of images (e.g., I versus P versus intra-refresh images), and quantity of movements in an image may impact any of the encoding duration, the size of the encoded image and then the transmission (e.g., transport) time. For example, the jitter that may be observed on frame time arrival may be correlated (e.g., correspond) to the jitter of encoding.
- Other reasons may be related to resource availability in the server, such as e.g., the current state of the running game (and the corresponding image complexity), the presence of concurrent streaming flows on the server and the available GPU power to render frames at a (e.g., steady) FPS.

**Example of Sporadic and Long Duration Inter-Frame Delay Variation**

For example, permanent extra buffering may be included at the client device side to absorb jitter and get a smoother decoded frame rate so that the decoded video frames may be available for display at their presentation time.

As illustrated in Figure 6A, the inter-frame delay variation may not be constant over time and may vary significantly during a gaming session with, for example, at different times, sporadic high values during a long period of time. In such situations (e.g. $\text{Jitter}_{local}$ value between frames #8000 and #11000 illustrated on Figure 6B) a significant extra buffering may allow to prevent stuttering and to cover all the cases, which may significantly increase the latency of the game, which may decrease the QoE. For example, adding significant extra buffering may impact the overall game session due to the fact that this kind of parameter may be set (e.g., at the beginning of the session) for the duration of the session.

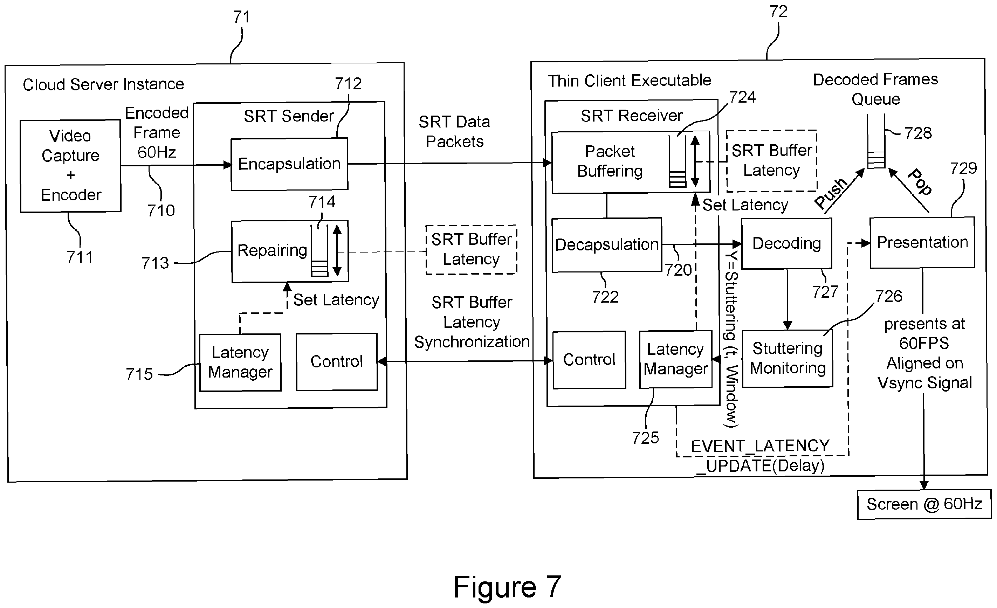

**Figure 7** is a system diagram illustrating an example of a cloud gaming system based on SRT. According to embodiment, the cloud gaming system may allow to improve the QoE of a game. A game may be executed on a server instance 71. Images of the (e.g., running) game may be captured and encoded by an encoder 711, for example, at a given encoding frame rate. Encoded frames may be encapsulated into a plurality of packets by an encapsulation processing module 712. The packets may be transmitted to a client device, for example based on the SRT protocol. For example, prior to the transmission, packets may be stored in sender SRT buffer 714 for being able to retransmit (e.g., unacknowledged) packets via a repairing module 713. Packets may be time stamped (e.g., include a time stamp) with time stamp information associated with a time at which the packet may have been any of generated, transmitted and stored in the sender SRT buffer. The server instance 71 may include a latency manager module 715 that may be configured to adjust the size of the sender SRT buffer 714, based on exchanging SRT messages with the client device 72.

According to embodiments, the client device 72 may receive a plurality of packets carrying video frames of the game, for example, via the SRT protocol. The received packets may be stored in a receiver SRT buffer 724 and extracted based on the SRT buffer latency and on the time stamp information included in the packets for being decapsulated by a decapsulation module 722 and decoded by a decoding module 727. The decoding module 727 may generate video frames which may be stored (e.g., pushed) in a decoded frame queue 728. A presentation module 729 may retrieve (e.g., pop) video frames for being displayed based on a $V_{Sync}$ signal.

According to embodiments, the client device 72 may include a stuttering monitoring module 726 that may be configured to monitor (e.g., detect, predict) a level of stuttering. The client device 72 may include a latency manager module 725 that may be configured to adjust the size of the receiver SRT buffer 724, based on exchanging SRT messages with the server.

According to embodiments, the SRT protocol and its latency buffers may allow to reduce the video stuttering by making the video frames available at the output of the client device protocol stack 720 with the same pace as at the production output 710 on the server side.

Embodiments described herein may allow to (e.g., dynamically) exchange latency information between the client device and the server, for example, during the game session (e.g., in addition to the beginning of the game session) to dynamically adapt (e.g., adjust) the SRT buffer latency for improving the QoE.

For example, the client device may (e.g., regularly) monitor some metrics to any of detect and predict occurrence(s) (e.g., and level(s)) of video stuttering.

According to embodiments, any of the client device and the server may determine a new SRT latency value to be set to the SRT buffer, based on e.g., a frame pace variation (such as e.g., a monitored stuttering (e.g., levels, predicted levels).

According to embodiments, the client device may exchange SRT control messages to synchronize the server to the new SRT buffer latency that may be determined (e.g., selected) by the (e.g., latency manager module of the) client device. The server may include a latency manager module to interact with the client device.

According to embodiments, the synchronization of the presentation module 729 of the client device may be (e.g., dynamically) adjusted, based on a SRT latency value change to take into account the new SRT buffer latency value to reduce video frames skipping.

**Example of Stuttering Detection**

For example, the stuttering monitoring module may obtain (e.g., monitor) time arrivals of frames at any of the output of the protocol stack (e.g., corresponding to the times when the packets carrying a video frame may have been extracted from the receiver SRT buffer 724), and at the output of the decoding module 723 (e.g., any of before and after decoding).

For example, the stuttering monitoring module may monitor time arrivals of any of a first packet and a last packet of a set of packets carrying one frame. For example, the packets may include signalling information indicating whether a packet corresponds to a first packet or to a last packet of a video frame.

For example, a metric (e.g., representative of e.g., any of a video stuttering level and a frame pace variation) may be obtained by applying a dispersion function to any monitored time arrivals (e.g., any of frames, packets) at any point in the client device. The dispersion function may be based on any of an inter-frame delay variation ($Jitter_{local}$) function applied on a (e.g., sliding) window, a mean, a median, a standard deviation, a variance, a mean absolute deviation (MAD), an interquartile range, and any other type of range function (e.g., beyond [25%-75%] range).

For example, the stuttering monitoring module may obtain (e.g., monitor) any of the number of delayed frames per second (e.g., frames that may have missed the $V_{Sync}$) and the number of dropped frames per second (e.g., in case of overflow of the decoded frames queue 728). For example, the stuttering monitoring module may obtain the ratio of a first number of frames versus a second number of frames (for a same period of time), wherein the first number may correspond to the frames displayed in time (e.g., according to their presentation time), and the second number of frames may correspond to the total number of frames displayed (e.g., including duplicated frames).

For example, in a case where the reception rate is lower than the capture rate (e.g., due to errors in transmission), the stuttering monitoring module may obtain (e.g., monitor) any of a number of frames received (e.g. decoded) per second, a number of frame errors after decoding, and any statistics from the protocol stack (such as e.g. packets errors, mis-ordered packets, packet drops at any of the server and client side).

For example, any metric according to any example described herein may be processed by the latency manager module 715, 725 that may be located on any of the client device 72 and the server 71. The latency manager module 715, 725 may be configured to obtain a metric representative of any of e.g., a level of video stuttering and a frame pace variation based on (e.g., any dispersion function) applied to any monitored metric described herein.

In a first example, the latency manager module 725 may be included in the client device, and the client device may obtain the metric representative of e.g., any of a level of video stuttering and a frame pace variation. In a second example, the latency manager module 755 may be included in the server, and the client device may transmit any monitored metric as described herein to the server. In any of the first and the second example, a new SRT latency value may be determined (e.g., requested) based on the metric according to any embodiment described herein.

The metric representative of a level of video stuttering, obtained by the latency manager module 715, 725 may be referred to herein as Y= StutteringValue($t_i$, window), where $t_i$ may represent the time of reception (resp. decoding) of the $i^{th}$ frame, and window may represent a time interval (e.g., [$t_i$-window, $t_i$]) on which the metric may be processed (combined, computed). The metric Y may be obtained, for example, for a (e.g., each) new incoming frame $F_i$.

According to embodiments, the latency manager module 715, 725 may obtain a (e.g., predicted) value of the metric Y (which may be referred to herein as $Y_{predict}$) based on a history of past values. For example, a new SRT latency value (which may be referred to herein a $SRTBufferLatency_{target}$) may be obtained based on e.g., a history of any of Y (e.g., $Y_{predict}$) and frame pace variations for e.g., different preceding periods of times. The new SRT buffer latency value may be set in the SRT client and may correspond to the (e.g., lowest) latency value large enough to reduce the (e.g., predicted) stuttering value. For example, the new SRT latency value may be increased (e.g., compared to the initial SRT latency value), while remaining bounded to a limit for not increasing the latency beyond a value. For example, the new SRT latency value may be obtained based on a hysteresis. For example, the latency may be incremented (e.g., by a first value) in a case where the level of stuttering is above a first level (e.g., maximum threshold) and may be decreased (e.g., by a second value) in a case where the level of stuttering is below a second level (e.g., threshold). More generally, the new (e.g., requested) latency value may be determined based on a frame pace variation (e.g., by the latency manager module 715, 725 that may be located on any of the client device and the server). For example, in a case where the (e.g., observed, measured, predicted) frame pace variation increases, the new (e.g., requested) latency value may be determined to increase (compared to the initial latency value), and in a case where the (e.g., observed, measured, predicted) frame pace variation decreases, the new (e.g., requested) latency value may be determined to decrease (compared to the initial latency value).

The SRT latency may be adjusted (e.g., updated) in the sender and the client device by exchanging SRT messages as disclosed in embodiments described herein. For example, the SRT buffering latency update may be at the initiative of (e.g., triggered by) any of the client device or the server (e.g., depending on the location of the latency manager module).

For example, and without limitation, a new SRT latency value may be obtained based on an inter-frame delay variation ($Jitter_{local}$) function applied to inter arrival times $T_i$, as described by the following formula:

$$Y_{predict} = Jitter_{local}(T_i, Window)$$

$$if\ Y_{predict} \geq 0.4\ SRTBufferLatency_{target} = SRTBufferLatency + \min(Y_{predict}, 2.0) * captureperiod$$

$$if\ Y_{predict} < 0.1\ SRTBufferLatency_{target} = SRTBufferLatency - 0.1 * captureperiod$$

**Example of SRT Session Latency Setup**

For example, the latency (e.g., through the setting of SRT buffer latency value) may be configured during the extended handshake phase and may remain the same value for the game session.

According to embodiments, the SRT protocol may include any of a live transmission mode and a cloud gaming transmission mode. The cloud gaming transmission mode may be associated with a capability to dynamically update (e.g., adjust) the SRT latency value, e.g., after the creation of (e.g., and at any time of) the SRT session.

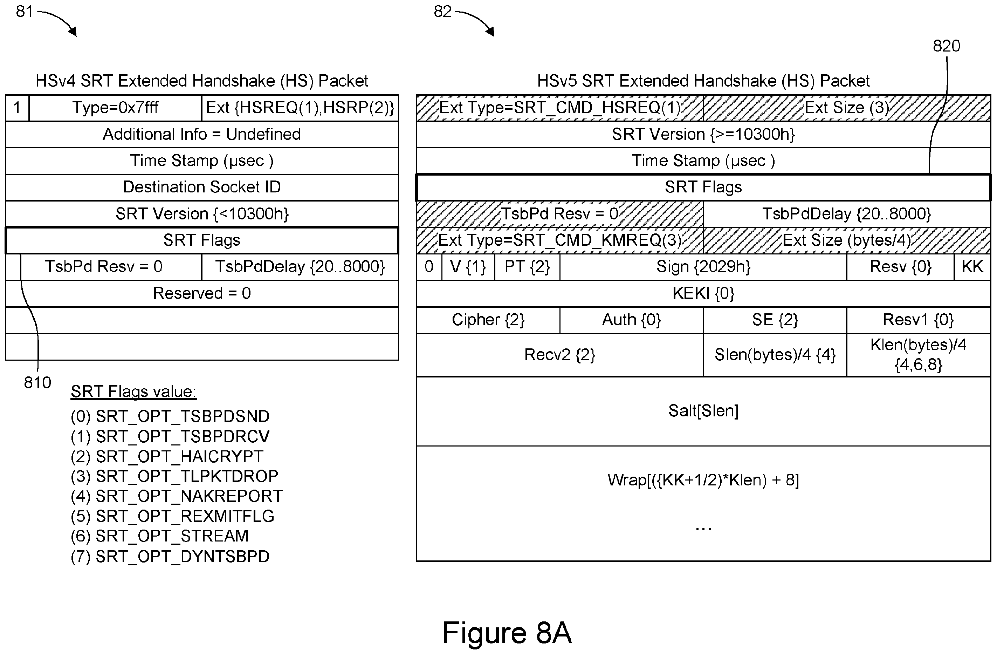

**Figure 8A** is a diagram illustrating two examples of extended handshake packet formats. In a first example, a HSv4 extended handshake packet 81 may include capability information 810 indicating a capability to support dynamic SRT latency update or not. In a second example, a HSv5 extended handshake packet 82 may include capability information 820 indicating a capability to support dynamic SRT latency update or not.

For example, the capability to support dynamic SRT latency update may be indicated by the seventh bit of the SRT Flags 810, 820 field, which may be referred to herein as SRT_OPT_DYNTSBPD (e.g., dynamic timestamp buffer packet delivery). A SRT message with the SRT_OPT_DYNTSBPD flag set to one may indicate a capability of the sender of the SRT message to support dynamic SRT latency update. Indicating the capability to support dynamic SRT latency update via any other bit of the SRT Flags 810, 820 field may be applicable to embodiments described herein.

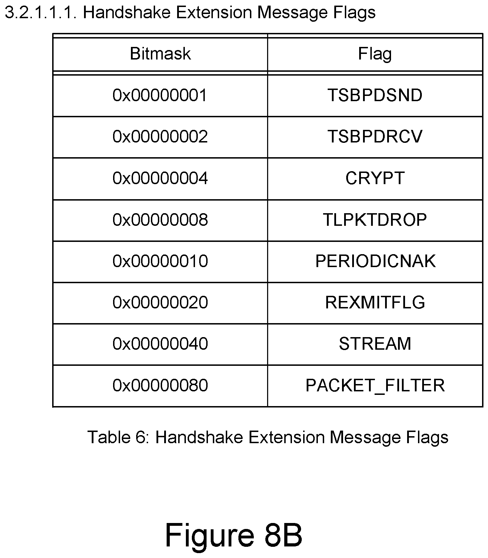

**Figure 8B** is a diagram illustrating an example of handshake extension message flags. For example, a bitmask for the SRT_OPT_DYNTSBPD may be 0x00000100.

Embodiments described herein are not limited to indicate a capability to support dynamic SRT latency update via a single bit flag. For example, any value of a field of a SRT extended handshake packet indicating a capability to support dynamic SRT latency update may be applicable to embodiments described herein.

According to embodiments, any entity (e.g., any of a SRT listener and a SRT caller) may indicate whether dynamic SRT latency update may be activated for a game session. The other entity may any of accept and refuse to activate the dynamic SRT latency update.

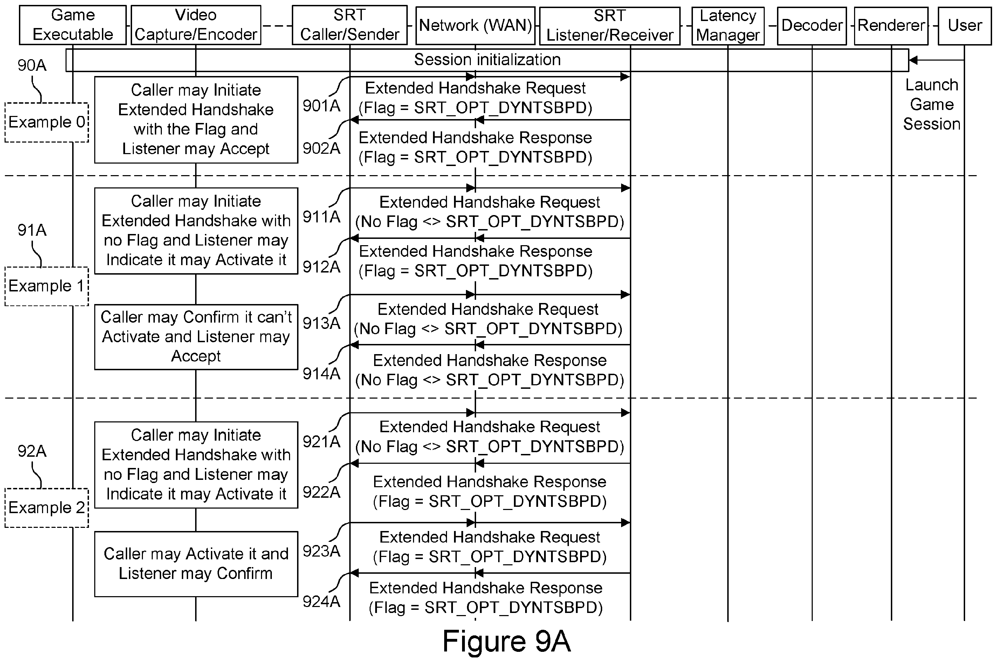

**Figure 9A** is a diagram illustrating an example of an extended handshake message exchange for indicating a capability to support latency dynamic change. For example, the message exchange may be initiated by the server.

In a first example 90A, the client device may receive an SRT extended handshake request message 901A comprising information indicating a server capability to support dynamic SRT latency update. For example, the client device may accept to perform dynamic SRT latency update during the game session by transmitting an SRT extended handshake response message 902A comprising information indicating a client capability to support dynamic SRT latency update.

In a second example 91A, the client device may receive a first SRT extended handshake request message 911A comprising information indicating no dynamic SRT latency update support from the server. For example, the client device may transmit a first SRT extended handshake response message 912A comprising information indicating a client capability to support dynamic SRT latency update for requesting the server to perform dynamic SRT latency update. For example, the client device may receive a second SRT extended handshake request message 913A comprising information confirming no dynamic SRT latency update support from the server. For example, the client device may transmit a second SRT extended handshake response message 914A comprising information confirming no dynamic SRT latency update may be performed in the game session.

In a third example 92A, the client device may receive a first SRT extended handshake request message 921A comprising information indicating no dynamic SRT latency update support from the server. For example, the client device may transmit a first SRT extended handshake response message 922A comprising information indicating a client capability to support dynamic SRT latency update for requesting the server to perform dynamic SRT latency update. For example, the client device may receive a second SRT extended handshake request message 923A comprising information indicating a server capability to support dynamic SRT latency update, indicating an agreement from the server to perform dynamic SRT latency update during the game session. For example, the client device may transmit a second SRT extended handshake response message 924A comprising information confirming a dynamic SRT latency update may be performed in the game session.

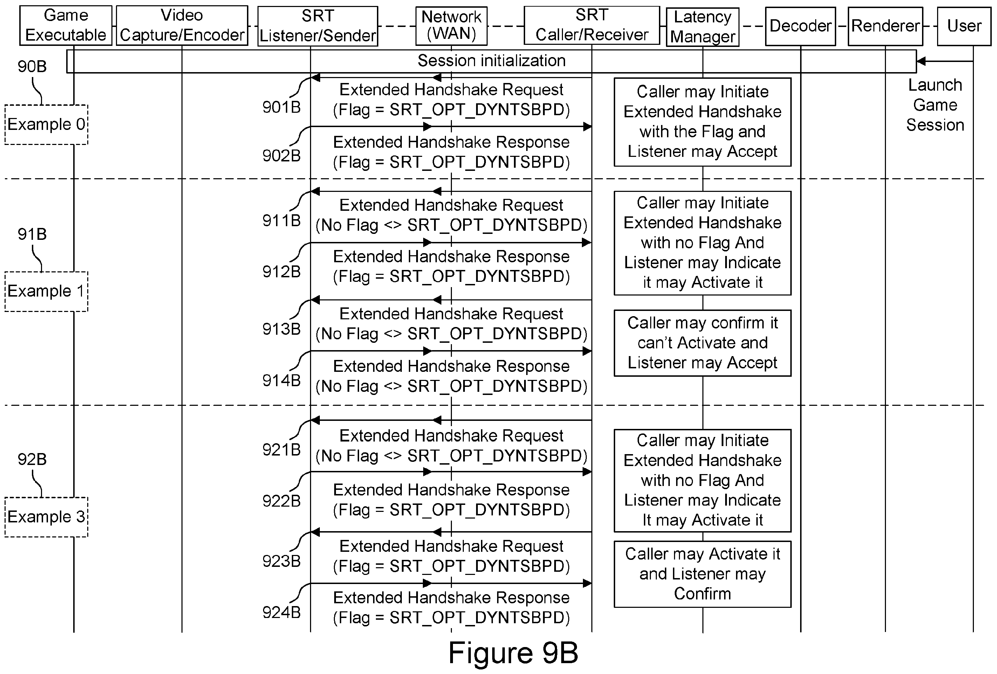

**Figure 9B** is a diagram illustrating another example of an extended handshake message exchange for indicating a capability to support latency dynamic change. For example, the message exchange may be initiated by the client device.

In a first example 90B, the client device may send an SRT extended handshake request message 901B comprising information indicating a client device capability to support dynamic SRT latency update, for requesting the server to be able to dynamically update the SRT latency during the game session. The client device may receive an SRT extended handshake response message 902B comprising information indicating a server capability to support dynamic SRT latency update, which may indicate agreement of the server to perform dynamic SRT latency update during the game session.

In a second example 91B, the client device may send a first SRT extended handshake request message 911B comprising information indicating no dynamic SRT latency update support from the client device. For example, the client device may receive a first SRT extended handshake response message 912B comprising information indicating a server capability to support dynamic SRT latency update for requesting the client device to perform dynamic SRT latency update. For example, the client device may send a second SRT extended handshake request message 913B comprising information confirming no dynamic SRT latency update support from the client device, for rejecting the server request. For example, the client device may receive a second SRT extended handshake response message 914B comprising information confirming no dynamic SRT latency update may be performed in the game session.

In a third example 92B, the client device may send a first SRT extended handshake request message 921B comprising information indicating no dynamic SRT latency update support. For example, the client device may receive a first SRT extended handshake response message 922B comprising information indicating a server capability to support dynamic SRT latency update for requesting the client device to perform dynamic SRT latency update. For example, the client device may send a second SRT extended handshake request message 923B comprising information indicating a client capability to support dynamic SRT latency update, for indicating an agreement to perform dynamic SRT latency update during the game session. For example, the client device may receive a second SRT extended handshake response message 924B comprising information confirming a dynamic SRT latency update may be performed in the game session.

## Example of SRT Session Latency Change

For example, after dynamic latency update may be operational on a (e.g., given) SRT session (e.g., based on the SRT extended handshake capability exchange), the receiver may activate the latency change procedure (e.g., a dynamic SRT latency update), for example, based on a detection of video stuttering. Throughout embodiments described herein, the expressions "dynamic SRT latency update" and "latency change procedure" may be used interchangeably to refer to an exchange of SRT messages for the purpose of updating the SRT latency values in the server and the client device.

For example, a new SRT latency value may be obtained according to any embodiments described herein. As further described herein, the latency change procedure may be initiated by any of the client device and the server.

According to embodiments, the initiator (e.g., any of the server and the client device) may send a SRT request message, which may be referred to herein as a dynamic timestamp buffer packet delivery (DYNTSBPD) request message, indicating the new SRT latency value.

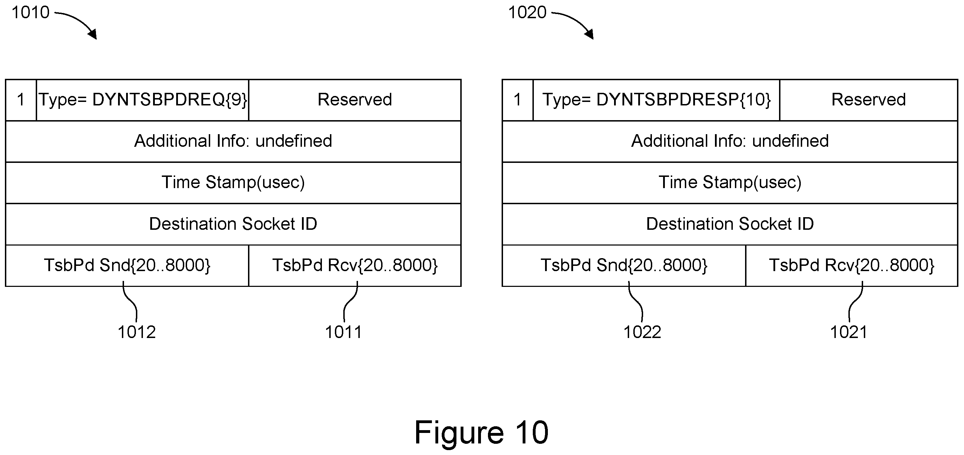

**Figure 10** is a diagram illustrating an example of a format of a SRT message for requesting a new SRT latency value. For example, a SRT dynamic timestamp buffer packet delivery (DYNTSBPD) request message 1010 may include first information indicating a new SRT latency value being requested by the initiator (e.g., any of the server and the client device) of the SRT latency change procedure. For example, a SRT DYNTSBPD response message 1020 may include second information indicating a responded SRT latency value in response to the new SRT latency value being requested by the initiator (e.g., any of the server and the client device). The SRT DYNTSBPD response message 1020 may be sent by the other party (e.g., any of the server and the client device) in response to the SRT DYNTSBPD request message 1010 sent by the initiator.

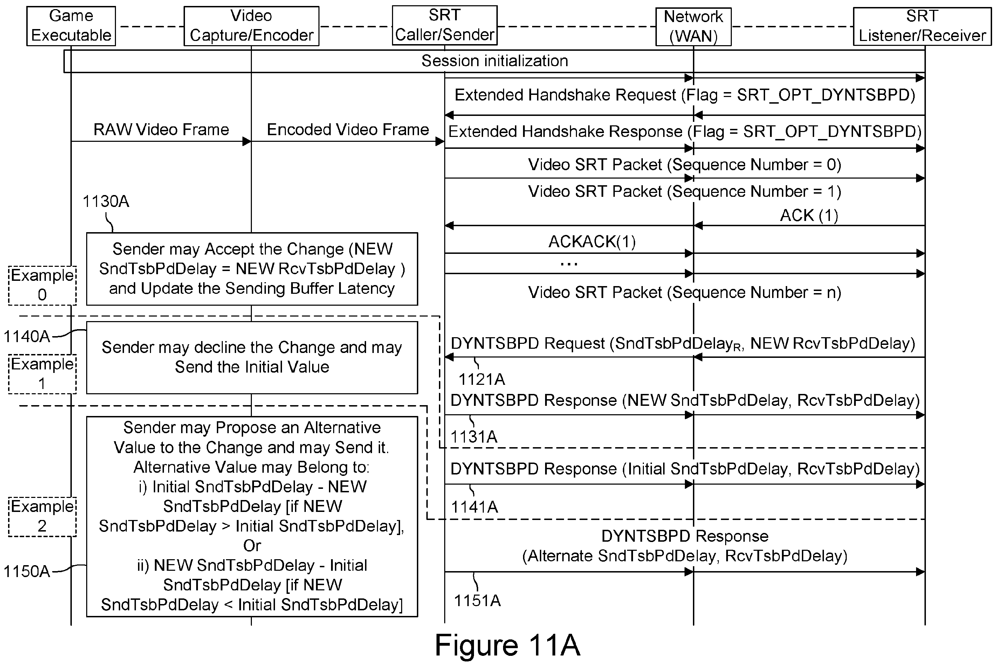

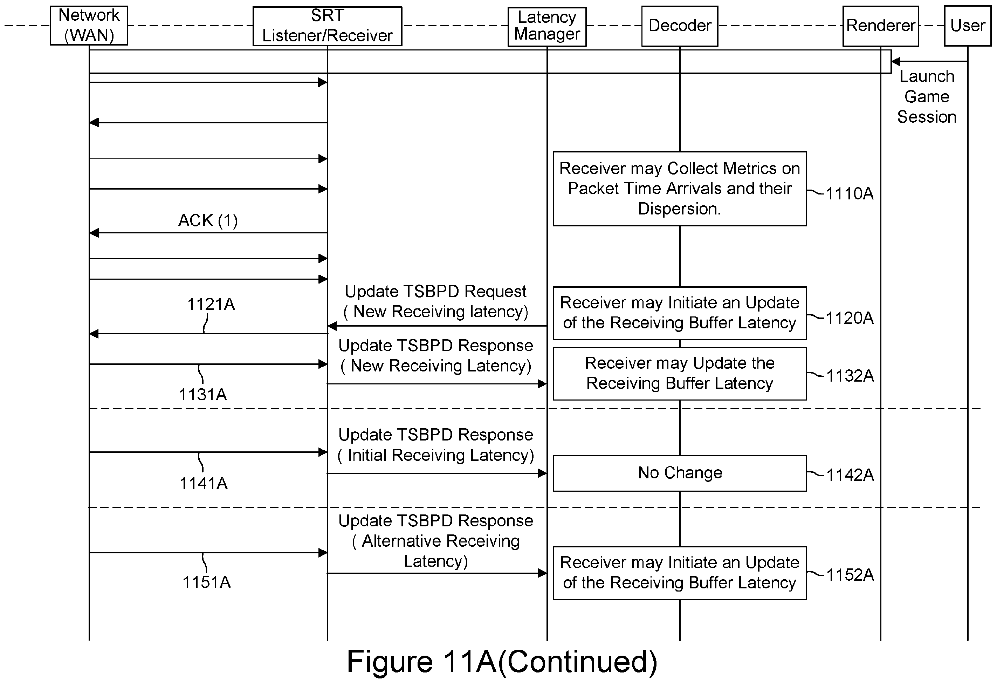

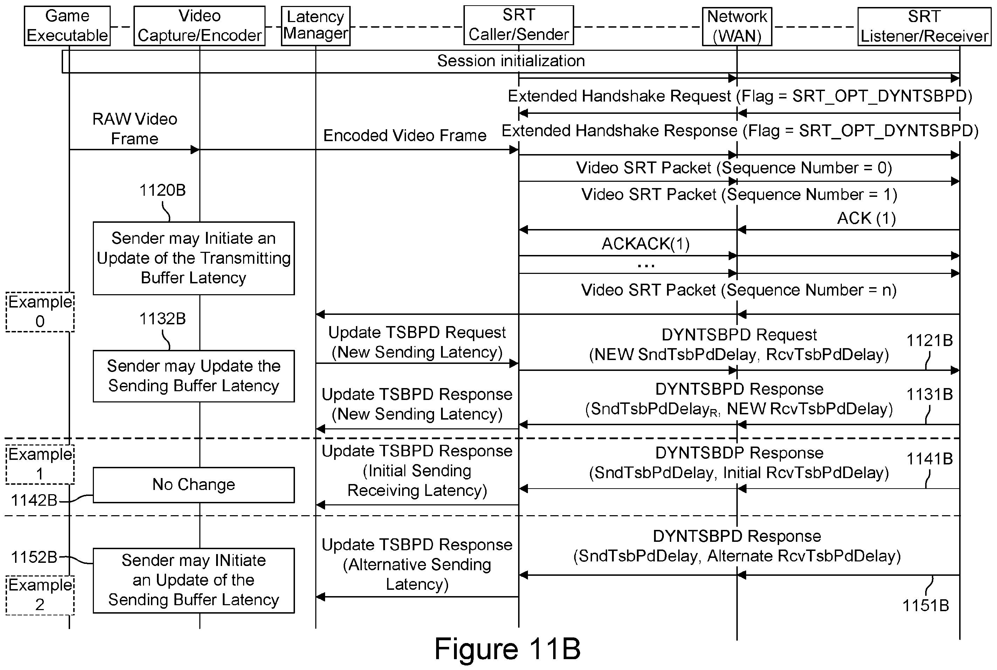

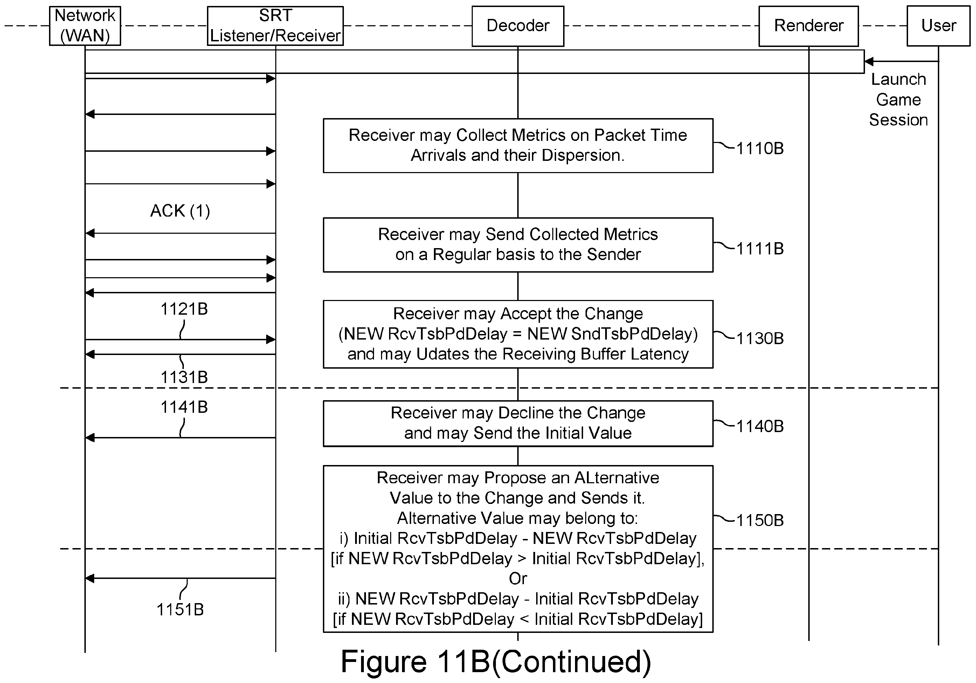

**Figures 11A** and **11B** are two diagrams illustrating two examples of a message exchange for a dynamic latency change procedure respectively initiated by the client device and by the server.

Referring to **Figures 10** and **11A,** in a step 1110A, the client device may receive packets carrying video frames of the game and may acknowledge them according to the SRT protocol. The client device may obtain any of metrics and a new SRT latency value according to any embodiments described herein.

For example, in a step 1120A, a SRT DYNTSBPD request message 1010, 1121A may be sent by the client device to the game server. The new (e.g., requested) SRT latency value may be indicated in first information (e.g., a TsbPd Rcv field) 1011 that may be included in the SRT DYNTSBPD request message 1010, 1121A. For example, the SRT DYNTSBPD request message 1010, 1121A may include a TsbPd Snd field 1012 indicating a sender latency value that may indicate the initial SRT latency. The initial SRT latency may indicate the (e.g., current SRT latency value), e.g., before the SRT latency update. The initial SRT latency may be the value as agreed during the (e.g., initial) SRT handshake.

For example, in a step 1130A, the server may accept to update the SRT latency value to the new (e.g., requested) value. For indicating acceptance, the server may transmit a SRT DYNTSBPD response message 1020, 1131A to the client device indicating the new SRT latency value. The SRT DYNTSBPD response message 1020, 1131A may include second information (e.g., a TsbPd Snd field) 1022 that may be set to the new (e.g., requested) SRT latency value. For example, the SRT DYNTSBPD response message 1020, 1131A may include a TsbPd Snd field 1021 that may be set to the new SRT (e.g., requested) latency value. In a step 1132A, the client device, after reception of the SRT DYNTSBPD response message 1020, 1131A indicating acceptance of the new SRT latency value, may update the SRT receiver latency value to the new SRT latency value.

For example, in a step 1140A, the server may decline (e.g., reject) the change. For indicating rejection, the server may transmit a SRT DYNTSBPD response message 1020, 1141A to the client device indicating the current (e.g., initial) SRT value. The SRT DYNTSBPD response message 1020, 1141A may include second information (e.g., a TsbPd Snd field) 1022 that may be set to the current (e.g., initial) SRT latency value. In a step 1142A, the client device, after reception of the SRT DYNTSBPD response message 1020, 1141A including the second information indicating rejection of the new SRT latency value, may keep the SRT receiver latency value to the current (e.g., initial) SRT latency value.

For example, in a step 1150A, the server may accept to update the SRT latency value, but with an alternative value (e.g., different from to the new value). For example, the alternative value may be any SRT latency value strictly comprised between the current (e.g., initial) SRT latency value and the new (e.g., requested) SRT latency value.

For indicating a partial acceptance (e.g., and an alternative proposal), the server may transmit a SRT DYNTSBPD response message 1020, 1151A to the client device indicating the alternative SRT value. The SRT DYNTSBPD response message 1020, 1151A may include second information (e.g., a TsbPd Snd field) 1022 that may be set to the alternative SRT latency value. In a step 1152A, the client device, after reception of the SRT DYNTSBPD response message 1020, 1151A including the second information indicating an alternative SRT latency value, may update the SRT receiver latency value to the alternative SRT latency value.

Referring to **Figures 10** and **11B,** in a step 1110B, the client device may receive packets carrying video frames of the game and may acknowledge them according to the SRT protocol. The client device may obtain any of metrics and a new SRT latency value according to any embodiments described herein.

For example, in a step 1111B, the client device may send a message including information e.g., representative of a video frame pace variation. For example, the information may describe (e.g., indicate) any value of any metric obtained based on a monitoring of any arrival time in the client device according to any embodiments described herein.

For example, in a step 1120B, a SRT DYNTSBPD request message 1010, 1121B may be sent by the server to the client. The new (e.g., requested) SRT latency value may be indicated in first information (e.g., a TsbPd Snd field) 1012 that may be included in the SRT DYNTSBPD request message 1010, 1121B. For example, the SRT DYNTSBPD request message 1010, 1121B may include a TsbPd Rcv field 1011 indicating a receiver latency value that may indicate the current (e.g., initial) SRT latency.

For example, in a step 1130B, the client device may accept to update the SRT latency value to the new value. For example, the client device may update the SRT receiver buffer latency according to the new value. For indicating acceptance, the client device may transmit a SRT DYNTSBPD response message 1020, 1131B to the server indicating the new SRT latency value. The SRT DYNTSBPD response message 1020, 1131B may include second information (e.g., a TsbPd Rcv field) 1021 that may be set to the new (e.g., requested) SRT latency value. For example, the SRT DYNTSBPD response message 1020, 1131B may include a TsbPd Snd field 1022 that may be set to the new SRT (e.g., requested) latency value. In a step 1132B, the server, after reception of the SRT DYNTSBPD response message 1020, 1131B indicating acceptance of the new SRT latency value, may update the SRT sender latency value (SndTsbPdDelay) to the new SRT latency value.

For example, in a step 1140B, the client device may decline (e.g., reject) the change and may keep the SRT receiver latency value to the current (e.g., initial) SRT latency value. For indicating rejection, the client may transmit a SRT DYNTSBPD response message 1020, 1141B to the server indicating the current (e.g., initial) SRT value. The SRT DYNTSBPD response message 1020, 1141B may include second information (e.g., a TsbPd Rcv field) 1021 that may be set to the current (e.g., initial) SRT latency value. In a step 1142B, the server, after reception of the SRT DYNTSBPD response message 1020, 1131B indicating rejection of the new SRT latency value, may keep the SRT sender latency value to the current (e.g., initial) SRT latency value.

For example, in a step 1150A, the client device may accept to update the SRT latency value, but with an alternative value (e.g., different from to the new value). For example, the new value (e.g., requested by the server) may not be compatible with the client device buffering capabilities (the buffer may be too small). In another example, the client device may determine that the new SRT latency value requested by the server may be too small for allowing the retransmission techniques to (e.g., efficiently) recover missing packets (e.g., in a case where the new latency is lower than three- times the current RTT value). For example, the alternative value may be any SRT latency value strictly comprised between the current (e.g., initial) SRT latency value and the new (e.g., requested) SRT latency value. For indicating a partial acceptance (e.g., and an alternative proposal), the client device may transmit a SRT DYNTSBPD response message 1020, 1151B to the server indicating the alternative SRT value. The SRT DYNTSBPD response message 1020, 1151B may include second information (e.g., a TsbPd Rcv field) 1021 that may be set to the alternative SRT latency value. In a step 1152B, the server, after reception of the SRT DYNTSBPD response message 1020, 1151B indicating an alternative SRT latency value, may update the SRT sender latency value to the alternative SRT latency value.

Embodiments described herein are not limited to the SRT message format(s) (e.g., fields) described herein, any other SRT message format, and more generally any message according to any other protocol for updating the buffer size between the server and the client device may be applicable to embodiments described herein.

## Example of Presentation Module Processing on Protocol Latency Update

Examples of processing of the (e.g., presentation processing module of the) client device are described herein, e.g., with reference to **Figure 7.**

In a first example, the processing of the (e.g., presentation processing module 729 of the) client device may be agnostic (e.g., unchanged) in a case of any SRT latency (e.g., dynamic) update. For example, the presentation processing module 729 may obtain (e.g., listen to) decoded frames in the decoded frame queue 728. At a (e.g., each) period of the $V_{Sync}$ signal, one available frame may be popped (e.g., extracted) from the queue 728 and displayed on screen. In a case where no frame is available in the queue at a $V_{Sync}$ signal period, the previously presented (e.g., displayed) frame may be presented (e.g., displayed) again. In a case where the decoded frame queue 728 overflows, any number of frames may be dropped according to any criterion. The criterion may be, for example, independent from the presentation times of the frames.

In a second example, the (presentation processing module 729 of the) client device may process a presentation time associated with a (e.g., each) frame. For example, in a case where the SRT latency value is updated with a new value, the presentation processing module 729 may be informed (e.g., indicated) of this change (e.g., according to any mechanism internal to the client device). For example, the SRT latency update may be represented (e.g., indicated) in a form of an additional signed delay (e.g., positive in a case of a latency increase and negative otherwise). The additional signed delay, e.g., corresponding to the difference between the previous and current protocol latency, may represent the additional signed time a frame may have been buffered in the protocol stack, before being delivered to the application (e.g., for decoding).

For example, the presentation processing module 729 may obtain (e.g., hold) a clock reference time ($T_0$), that may correspond to the time a first frame ($F_0$) may be presented (e.g., displayed) on screen at a $V_{Sync}$ period. For the sake of simplicity and without loss of generality, frames may be delivered sequentially at the capture rate. For example, the frames may be presented (e.g., displayed) based on a computed presentation time $T_i$ that may be obtained (e.g., derived) from the sequence index of the frame (e.g., the $i^{th}$ frame $F_i$ may be presented at $T_i = T_0 + i \times$ capture_period). In a case where the SRT latency is updated, the additional signed delay may be used to shift the clock reference time, positively or negatively, e.g., $T_0 = T_0 +$ delay.

For example, in a case where the SRT latency increases, the last displayed frame may be displayed again (e.g., no frame may be popped from the decoded frame queue 728 for display) for a number of times corresponding to the latency increase, before restoring the operation of popping frames from the decoded frame queue 728 for the presentation. The last display frame (which may be duplicated) at the SRT latency increase may correspond to the last frame that may have been displayed before the SRT latency may have been updated. For example, in a case where a SRT latency increase of 33 milliseconds (e.g., corresponding to two periods of a 60Hz screen) occurs at presentation time $T_i$, (e.g., after a frame $F_i$ may have been displayed), the presentation module may display this same frame for the two next (e.g., capture) periods, before the presentation module may pop any frame from the queue. For example, one frame may be frozen for three periods, while all following frames may be displayed at regular intervals without any stuttering. Duplicating frames at a (e.g., single) point in time corresponding to a latency buffer increase may allow to concentrate any stuttering issue at the latency change time, contributing to the overall QoE improvement.

For example, adjusting the clock reference time based on an additional signed delay may also allow to determine which (e.g., late) frames may be dropped (e.g., not displayed). For example, in a case where a frame $F_i$ is decoded too late to be presented on time, and in a case where the next frame $F_{i+1}$ is available in the decoded frame queue 728 , the presentation processing module may determine which frame may be presented (e.g., displayed) at the next period of the $V_{Sync}$ signal (e.g., at time $T_{sync\_period}$) based on the clock reference time. For example, the clock reference time may be used to determine the presentation times $T_i$ and $T_{i+1}$ of respectively the $i^{th}$ and the $(i+1)^{th}$ frame, based on $T_0$. For example, the frame to be displayed at the next period of the $V_{Sync}$ signal may be the frame (among $F_i$ and $F_{i+1}$) whose presentation time may be closest to $T_{sync\_period}$ (e.g. minimum between $|T_{sync\_period} - T_i|$, $|T_{sync\_period} - T_{i+1}|$), and the other frame (among $F_i$ and $F_{i+1}$) may be dropped.

**Example of Server Processing on Protocol Latency Update**

According to embodiments, the SRT buffer latency may be used at the server side to keep the sent packets (e.g., for an amount of time corresponding to the SRT buffer latency), waiting for their acknowledgement by the receiver (e.g., for possible retransmissions). According to embodiments, the server may adapt the SRT sender buffer to the buffer latency value changes that may occur during the SRT session.

In a first example, the SRT buffer latency (e.g., RcvTsbPdDelay ) may be reduced by the client device (e.g., receiver). The server (e.g., sender) may determine to send some retransmission packets, (e.g., that may be out of date for the updated shorter client deadline (e.g., lower SRT buffer latency). To anticipate high jitter disparities (e.g., and a future increase of SRT buffer latency, e.g., due to frequent buffer latency changes), the server may keep for an extra duration the packets that may have just become out-of-date to be able to retransmit them in case the buffer increases in a near future.

In a second example, in a case where SRT buffer latency is increased by the receiver to buffer more packets, the extra time may be used by the sender to send more retransmission packets.

**Figure 12A** is a diagram illustrating an example of a client (e.g., processing) device 12A for improving a QoE of video content such as e.g., a game. For example, the processing device 12A may comprise a cloud gaming (e.g., thin) client that may interact with a content (e.g., game) server. For example, the processing device 12A may comprise an input interface 1260 configured to receive (e.g., user input) commands from any number of input devices (such as e.g., any of a joystick, a mouse, a keyboard, remote control...). The commands may be destinated to the content (e.g., game) server. For example, the processing device 12A may comprise a network interface 1200 for connection to a network. The network interface 1200 may be configured to receive a plurality of packets from the server. The packets may contain (e.g., carry) video frames of the video content (e.g., game) to be decoded and displayed by the client (e.g., processing) device 12A (e.g., a packet may contain a part of a video frame and a video frame may be carried via a set of packets). For example, the network interface 1200 may be configured to send packets to a server. A packet may include, for example, an (e.g., user) input command. For example, the network interface 1200 may be configured to exchange any kind of control messages (e.g., SRT messages) with the server. According to embodiments, the network interface 1200 may be any of:

- a wireless local area network interface such as Bluetooth, Wi-Fi in any flavour, or any kind of wireless interface of the IEEE 802 family of network interfaces;
- a wired LAN interface such as Ethernet, IEEE 802.3 or any wired interface of the IEEE 802 family of network interfaces;
- a wired bus interface such as USB, FireWire, or any kind of wired bus technology.
- a broadband cellular wireless network interface such a 2G/3G/4G/5G cellular wireless network interface compliant to the 3GPP specification in any of its releases;
- a wide area network interface such a xDSL, FFTx or a WiMAX interface.

More generally, any network interface allowing to send (e.g., any of user input command and control) packets and receive a plurality of packets carrying video frames may be applicable to embodiments described herein.

According to embodiments, the network interface 1200 may be coupled to a processing module 1220, that may be configured to apply an initial latency value to the received packets before decoding and displaying. For example, the processing module 1220 may be configured to obtain a value of a metric representative of any of a video stuttering level and a variation of a pace at which video frames may arrive. For example, the processing module 1220 may be configured to exchange messages with the server via the network interface 1200 for obtaining a new latency value based on the value of the metric. In a first example of message exchange, the processing module 1220 may be configured to send a request message to the server, the request message comprising first information indicating a requested latency value determined based on the frame pace variation and the processing module 1220 may be configured to receive a response message from the server, the response message comprising second information indicating the new latency value. In a second example of message exchange, the processing module 1220 may be configured to send information to the server, the information indicating a metric representative of a frame pace variation, the processing module 1220 may be configured to receive a request message from the server, the request message comprising first information indicating a requested latency value and the processing module 1220 may be configured to send a response message to the server, the response message comprising second information indicating the new latency value based on the requested latency value. For example, the processing module 1220 may be configured to apply the new SRT latency value to received subsequent packets before decoding and displaying the subsequent packets. For example, the processing module 1220 may be configured to decode the video frames and send the video frames for display on a video output 1240 such as e.g., a display means. According to embodiments, the display means, internal or external, may be any of a personal computer screen, a TV screen, a tablet screen, a smartphone screen. More generally any display means allowing to display a video of video content such as e.g., a game may be applicable to embodiments described herein.

**Figure 12C** is a diagram illustrating an example of a server (e.g., processing) device 12C for improving a QoE of video content such as e.g., a game. For example, the processing device 12C may interact with a client device. For example, the processing device 12C may comprise a network interface 1210 for connection to a network. The network interface 1210 may be configured to send a plurality of packets to a client device. The packets may contain (e.g., carry) video frames of the video content (e.g., game) to be decoded and displayed by the client device. For example, a packet may contain a part of a video frame and a video frame may be carried via a set of packets. For example, the network interface 1210 may be configured to receive packets from the client device. A packet may include, for example, an (e.g., user) input command. For example, the network interface 1210 may be configured to exchange any kind of control messages (e.g., SRT messages) with the client device. According to embodiments, the network interface 1210 may be any of:

- a wireless local area network interface such as Bluetooth, Wi-Fi in any flavour, or any kind of wireless interface of the IEEE 802 family of network interfaces;
- a wired LAN interface such as Ethernet, IEEE 802.3 or any wired interface of the IEEE 802 family of network interfaces;
- a wired bus interface such as USB, FireWire, or any kind of wired bus technology.
- a broadband cellular wireless network interface such a 2G/3G/4G/5G cellular wireless network interface compliant to the 3GPP specification in any of its releases;
- a wide area network interface such a xDSL, FFTx or a WiMAX interface.

More generally, any network interface allowing to receive (e.g., any of user input command and control) packets and send a plurality of packets carrying video frames may be applicable to embodiments described herein.

According to embodiments, the network interface 1210 may be coupled to a processing module 1230, that may be configured to send a plurality of packets carrying video frames of video content to a client device. For example, the processing module 1230 may be configured to keep the packets in a buffer for retransmission during a first amount of time associated with an initial latency value. For example, the processing module 1230 may be configured to exchange messages with the server via the network interface 1210 for obtaining a new latency value. In a first example of message exchange, the processing module 1230 may be configured to receive a request message from the client device, the request message comprising first information indicating a requested latency value and the processing module 1230 may be configured to send a response message to the client device, the response message comprising second information indicating the new latency value (e.g., that may be set to the requested latency value). In a second example of message exchange, the processing module 1230 may be configured to receive information indicating a metric representative of a frame pace variation, the processing module 1230 may be configured to send a request message to the client device, the request message comprising first information indicating a requested latency value determined based on the indicated metric and the processing module 1230 may be configured to receive a response message from the client device, the response message comprising second information indicating a new latency value.

For example, the processing module 1230 may be configured to execute a game instance. For example, the processing module 1230 may comprise a GPU (not represented) that may be configured to render (e.g., subsequent) video frames of the game. For example, the processing module 1230 may be configured to encode the rendered (e.g., subsequent) video frames and to encapsulate the encoded (e.g., subsequent) video frames in a plurality of (e.g., subsequent) packets to be sent to the client device. For example, the processing module 1230 may be configured to send the plurality of subsequent packets carrying subsequent video frames of the video content to the client device. For example, the processing module 1230 may be configured to keep the subsequent packets in the buffer for retransmission during a second amount of time associated with the new latency value.

**Figure 12B** represents an example of an architecture of any of the client and the server (e.g., processing) device 12A, 12C described herein. The processing device 12A, 12C may comprise one or more processor(s) 1210, which may be, for example, any of a CPU, a GPU a DSP (English acronym of Digital Signal Processor), along with internal memory 1250 (e.g., any of RAM, ROM, EPROM). The processing device 12A, 12C may comprise any number of Input/Output interface(s) 1230 adapted to send output information and/or to allow a user to enter commands and/or data (e.g. any of a keyboard, a mouse, a touchpad, a webcam, a display), and/or to send / receive data over a network interface; and a power source 1270 which may be external to the processing device 12A, 12C.

According to embodiments, the processing device 12A, 12C may further comprise a computer program stored in the memory 1250. The computer program may comprise instructions which, when executed by the processing device 12A, 12C, in particular by the processor(s) 1210, make the processing device 12A, 12C carrying out the processing method described with reference to any of figures 13, 14, 15, 16 and 17. According to a variant, the computer program may be stored externally to the processing device 12A, 12C on a non-transitory digital data support, e.g. on an external storage medium such as any of a SD Card, HDD, CD-ROM, DVD, a read-only and/or DVD drive, a DVD Read/Write drive, all known in the art. The processing device 12A, 12C may comprise an interface to read the computer program. Further, the processing device 12A, 12C may access any number of Universal Serial Bus (USB)-type storage devices (e.g., "memory sticks.") through corresponding USB ports (not shown).

According to embodiments, the processing device 12A may be any of a game device, a set top box device, a TV set, a digital media player (e.g., renderer) device, an Internet gateway, a mobile device, a communication device, a tablet (or tablet computer), a smartphone, a laptop computer, a desktop computer. According to embodiments, the processing device 12C may be any of a desktop computer, a server, and an instance of a server.

**Figure 13** is a diagram illustrating an example of a method for improving a QoE of a game. For example, the method may be implemented in a (e.g., cloud gaming) client device. According to embodiments, in a step 1310, a plurality of packets carrying video frames of a game may be received by the (e.g., cloud gaming) client device from a server. According to embodiments, in a step 1320, an initial SRT latency value may be applied to the received packets before decoding and displaying. According to embodiments, in a step 1330, a value of a metric representative of a video stuttering level may be obtained based on a video frame pace variation. According to embodiments, in a step 1340, SRT messages may be exchanged between the (e.g., cloud gaming) client device and the server for obtaining a new SRT latency value based on the value of the metric. According to embodiments, in a step 1350, the QoE of the game may be improved by applying the new SRT latency value to received subsequent packets before decoding and displaying.

For example, the received packets and the received subsequent packets may be stored in a SRT receiver buffer, and an SRT latency value may be applied to packets by extracting the packets from the SRT receiver buffer based on the SRT latency value and on time stamp information included in the packets. For example, the time stamp information may indicate respective times associated with a storage of the packets in a SRT sender buffer of the server. For example, the SRT latency value may be any of the initial SRT latency value and the new SRT latency value.

For example, a timestamp included in a packet may indicate a first time at which the packet may have been stored in the SRT sender buffer. For example, the packet may be extracted at a second time corresponding to an amount of time after the first time, the amount of time may be constant for successive packets and may be associated with the SRT latency value.

For example, the video frame pace variation may be a variation of a pace at which the video frames may be any of received, extracted from the SRT receiver buffer and decoded.

For example, the new SRT latency value may be obtained based on a history of values of the metric obtained for different preceding periods of times.

For example, the metric value may be obtained based on a dispersion function of any of frame arrival times, packet arrival times, frame decoding times, and frame display times.

For example, the dispersion function may be any of a mean, a median, a standard deviation, a variance, a mean absolute deviation, and an interquartile.

For example, the value of the metric may be further based on any of a first number of delayed frames and a second number of dropped frames.

For example, a SRT request message may be sent by the (e.g., cloud gaming) client device to the server. The SRT request message may comprise first information indicating a requested SRT latency value. The requested SRT latency value may correspond to the new SRT latency value, that may have been determined by the (e.g., cloud gaming) client device.

For example, a SRT response message may be received by the (e.g., cloud gaming) client device from the server. The SRT response message may comprise second information indicating a sender SRT latency value in response to the requested latency value. For example, the new SRT latency value to be applied to the received subsequent packets may be set to the sender SRT latency value on a condition that the sender SRT latency value is equal to the requested SRT latency value or strictly comprised between the requested SRT latency value and the initial SRT latency value.

For example, the value of the metric may be sent by the (e.g., cloud gaming) client device to the server.

For example, a SRT request message may be received by the (e.g., cloud gaming) client device from the server. The SRT request message may comprise first information indicating the new SRT latency value.

For example, a SRT response message may be sent by the (e.g., cloud gaming) client device to the server. The SRT response message may comprise second information indicating the new SRT latency value for acknowledging the new SRT latency value.

For example, before the packets carrying the video frames may be received, a SRT extended handshake request message may be sent by the (e.g., cloud gaming) client device to the server. The SRT extended handshake request message may indicate a client capability to support dynamic latency operation.

For example, a SRT extended handshake response message may be received by the (e.g., cloud gaming) client device from the server in response to the SRT extended handshake request message. The (e.g., cloud gaming) client device may perform dynamic latency operation on a condition that the SRT extended handshake response message indicates a server capability to support dynamic latency operation.

For example, before the packets carrying the video frames may be received, a SRT extended handshake request message may be received by the (e.g., cloud gaming) client device from the server. On a condition that the SRT extended handshake request message indicates a server capability to support dynamic latency operation, a SRT extended handshake response message may be sent by the (e.g., cloud gaming) client device to the server indicating a client capability to support dynamic latency operation.

For example, before the packets carrying the video frames may be received, a SRT extended handshake request message may be received by the (e.g., cloud gaming) client device from the server, and on a condition that the SRT extended handshake request message does not include any indication of a server capability to support dynamic latency operation, a SRT extended handshake response message may be sent by the (e.g., cloud gaming) client device to the server indicating a client capability to support dynamic latency operation.

For example, another SRT extended handshake request message may be received by the (e.g., cloud gaming) client device, the dynamic latency operation may be performed on a condition that the other SRT extended handshake request message indicates a server capability to support dynamic latency operation.

**Figure 14** is a diagram illustrating a first example of a method implemented in a client device e.g., for improving a QoE of video content. For example, in a step 1410, the client device may receive a plurality of packets carrying video frames of video content from a server. For example, in a step 1420, the client device may apply an initial latency value to the received packets before decoding and displaying. For example, in a step 1430, the client device may send a request message to the server, the request message may comprise first information indicating a requested latency value that may be determined based on a frame pace variation. For example, in a step 1440, the client device may receive a response message from the server, the response message may comprise second information indicating a new latency value. For example, in a step 1450, the client device may apply the new latency value to received subsequent packets before decoding and displaying.

For example, the initial latency value and the new latency value may be applied to respectively the packets and the subsequent packets by extracting respectively the packets and the subsequent packets from a receiver buffer based on (i) respectively the initial latency value and the new latency value and (ii) time stamp information included in the packets and the subsequent packets. The time stamp information may indicate, for example, respective times associated with a storage of the packets and the subsequent packets in e.g., a sender buffer of the server.

For example, the time stamp information included in a packet of any of the packets and the subsequent packets may indicate a first time at which the packet may have been stored in e.g., the sender buffer. For example, the packet may be extracted at a second time corresponding to an amount of time after the first time, the amount of time being constant for successive packets and being associated with any of the initial latency value and the new latency value.

For example, the frame pace variation may be a variation of a pace at which the video frames may be any of received, extracted from the receiver buffer and decoded.

For example, the new latency value may be obtained based on a history of frame pace variations for different preceding periods of times.

For example, the new latency value may be further based on any of a number of delayed frames and a number of dropped frames.

For example, the new latency value may be applied to the subsequent packets on a condition that the new latency value is equal to the requested latency value or strictly comprised between the requested latency value and the initial latency value.

For example, before the packets carrying the video frames may be received, the client device may send a handshake request message to the server. For example, the handshake request message may comprise third information indicating a client capability to support dynamic latency operation.

For example, the client device may receive a handshake response message from the server e.g., in response to the handshake request message. For example, the client device may perform dynamic latency operation by sending the request message on a condition that the handshake response message comprises fourth information indicating a server capability to support dynamic latency operation.

For example, before the packets carrying the video frames may be received, the client device may receive a handshake request message from the server. On a condition that the handshake request message comprises third information indicating a server capability to support dynamic latency operation, the client device may send a handshake response message to the server, the handshake response message may comprise fourth information indicating a client capability to support dynamic latency operation.

For example, the initial latency value and the new latency value may be secure reliable transport, SRT, latency values associated with a SRT protocol.

**Figure 15** is a diagram illustrating a second example of a method implemented in a server e.g., for improving a QoE of video content. For example, in a step 1510, the server may send a plurality of packets carrying video frames of video content to a client device. For example, in a step 1520, the server may keep the packets e.g., in a buffer for retransmission during a first amount of time associated with an initial latency value. For example, in a step 1530, the server may receive a request message from the client device, the request message may comprise first information indicating a requested latency value. For example, in a step 1540, the server may send a response message to the client device, the response message may comprise second information indicating a new latency value. For example, the new latency value may be set to the requested latency value to indicate acceptation by the server of the requested latency value. For example, in a step 1550, the server may send a plurality of subsequent packets carrying subsequent video frames of the video content to the client device. For example, in a step 1560, the server may keep the subsequent packets e.g., in the buffer for retransmission during a second amount of time associated with the new latency value.

**Figure 16** is a diagram illustrating a third example of a method implemented in a client device e.g., for improving a QoE of video content. For example, in a step 1610, the client device may receive a plurality of packets carrying video frames of video content from a server. For example, in a step 1620, the client device may apply an initial latency value to the received packets before decoding and displaying. For example, in a step 1630, the client device may send information to the server, the information indicating a metric representative of a frame pace variation. For example, in a step 1640, the client device may receive a request message from the server, the request message may comprise first information indicating a requested latency. For example, in a step 1650, the client device may send a response message to the server, the response message may comprise second information indicating a new latency value based on the requested latency value. For example, the new latency value may be set to the requested latency value to indicate acceptation by the client device of the requested latency value. For example, in a step 1660, the client device may apply the new latency value to received subsequent packets before decoding and displaying.

For example, the metric may be based on a dispersion function of any of frame arrival times, packet arrival times, frame decoding times, and frame display times.

For example, the dispersion function may comprise any of a mean, a median, a standard deviation, a variance, a mean absolute deviation, and an interquartile.

For example, the metric may be further based on any of a number of delayed frames and a number of dropped frames.

**Figure 17** is a diagram illustrating a fourth example of a method implemented in a server e.g., for improving a QoE of video content. For example, in a step 1710, the server may send a plurality of packets carrying video frames of video content to a client device. For example, in a step 1720, the server may keep the packets e.g., in a buffer for retransmission during a first amount of time associated with an initial latency value. For example, in a step 1730, the server may receive information indicating a metric representative of a frame pace variation. For example, in a step 1740, the server may send a request message to the client device, the request message may comprise first information indicating a requested latency value. For example, the server may determine the requested latency value based on the indicated metric. For example, in a step 1750, the server may receive a response message from the client device, the response message may comprise second information indicating a new latency value. For example, the new latency value may be set to the requested latency value to indicate acceptation by the client device of the requested latency value. For example, in a step 1760, the server may send a plurality of subsequent packets carrying subsequent video frames of the video content to the client device. For example, in a step 1770, the server may keep the subsequent packets e.g., in the buffer for retransmission during a second amount of time associated with the new latency value.

**CONCLUSION**

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU 102, UE, terminal, base station, RNC, or any host computer.

While not explicitly described, the present embodiments may be employed in any combination or sub-combination. For example, the present principles are not limited to the described variants, and any arrangement of variants and embodiments can be used. Moreover, the present principles are not limited to the described channel access methods and any other type of channel access methods is compatible with the present principles.

Any characteristic, variant or embodiment described for a method is compatible with an apparatus device comprising means for processing the disclosed method, with a device comprising a processor configured to process the disclosed method, with a computer program product comprising program code instructions and with a non-transitory computer-readable storage medium storing program instructions.

Moreover, in the embodiments described above, processing platforms, computing systems, controllers, and other devices containing processors are noted. These devices may contain at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed."

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits. It should be understood that the representative embodiments are not limited to the above-mentioned platforms or CPUs and that other platforms and CPUs may support the provided methods.

The data bits may also be maintained on a computer readable medium including magnetic disks, optical disks, and any other volatile (e.g., Random Access Memory ("RAM")) or non-volatile (e.g., Read-Only Memory ("ROM")) mass storage system readable by the CPU. The computer readable medium may include cooperating or interconnected computer readable medium, which exist exclusively on the processing system or are distributed among multiple interconnected processing systems that may be local or remote to the processing system. It is understood that the representative embodiments are not limited to the above-mentioned memories and that other platforms and memories may support the described methods.

In an illustrative embodiment, any of the operations, processes, etc. described herein may be implemented as computer-readable instructions stored on a computer-readable medium. The computer-readable instructions may be executed by a processor of a mobile unit, a network element, and/or any other computing device.

There is little distinction left between hardware and software implementations of aspects of systems. The use of hardware or software is generally (e.g., but not always, in that in certain contexts the choice between hardware and software may become significant) a design choice representing cost vs. efficiency tradeoffs. There may be various vehicles by which processes and/or systems and/or other technologies described herein may be effected (e.g., hardware, software, and/or firmware), and the preferred vehicle may vary with the context in which the processes and/or systems and/or other technologies are deployed. For example, if an implementer determines that speed and accuracy are paramount, the implementer may opt for a mainly hardware and/or firmware vehicle. If flexibility is paramount, the implementer may opt for a mainly software implementation. Alternatively, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples may be implemented, individually and/or collectively, by a wide range of hardware, software, firmware, or virtually any combination thereof. Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Application Specific Standard Products (ASSPs); Field Programmable Gate Arrays (FPGAs) circuits, any other type of integrated circuit (IC), and/or a state machine.

Although features and elements are provided above in particular combinations, one of ordinary skill in the art will appreciate that each feature or element can be used alone or in any combination with the other features and elements. The present disclosure is not to be limited in terms of the particular embodiments described in this application, which are intended as illustrations of various aspects. Many modifications and variations may be made without departing from its spirit and scope, as will be apparent to those skilled in the art. No element, act, or instruction used in the description of the present application should be construed as critical or essential to the invention unless explicitly provided as such. Functionally equivalent methods and apparatuses within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims.

It is to be understood that this disclosure is not limited to particular methods or systems.

It is also to be understood that the terminology used herein is for the purpose of describing particular embodiments only and is not intended to be limiting. As used herein, when referred to herein, the terms "station" and its abbreviation "STA", "user equipment" and its abbreviation "UE" may mean (i) a wireless transmit and/or receive unit (WTRU), such as described infra; (ii) any of a number of embodiments of a WTRU, such as described infra; (iii) a wireless-capable and/or wired-capable (e.g., tetherable) device configured with, inter alia, some or all structures and functionality of a WTRU, such as described infra; (iii) a wireless-capable and/or wired-capable device configured with less than all structures and functionality of a WTRU, such as described infra; or (iv) the like. Details of an example WTRU, which may be representative of any UE recited herein, are provided below with respect to FIGS. 1A-1D.

In certain representative embodiments, several portions of the subject matter described herein may be implemented via Application Specific Integrated Circuits (ASICs), Field Programmable Gate Arrays (FPGAs), digital signal processors (DSPs), and/or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein may be distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a CD, a DVD, a digital tape, a computer memory, etc., and a transmission type medium such as a digital and/or an analog communication medium (e.g., a fiber optic cable, a waveguide, a wired communications link, a wireless communication link, etc.).

The herein described subject matter sometimes illustrates different components contained within, or connected with, different other components. It is to be understood that such depicted architectures are merely examples, and that in fact many other architectures may be implemented which achieve the same functionality. In a conceptual sense, any arrangement of components to achieve the same functionality is effectively "associated" such that the desired functionality may be achieved. Hence, any two components herein combined to achieve a particular functionality may be seen as "associated with" each other such that the desired functionality is achieved, irrespective of architectures or intermediate components. Likewise, any two components so associated may also be viewed as being "operably connected", or "operably coupled", to each other to achieve the desired functionality, and any two components capable of being so associated may also be viewed as being "operably couplable" to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, where only one item is intended, the term "single" or similar language may be used. As an aid to understanding, the following appended claims and/or the descriptions herein may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"). The same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations).

Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, the terms "any of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items. Moreover, as used herein, the term "set" or "group" is intended to include any number of items, including zero. Additionally, as used herein, the term "number" is intended to include any number, including zero.

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein may be readily broken down into a lower third, middle third and upper third, etc. As will also be understood by one skilled in the art all language such as "up to," "at least," "greater than," "less than," and the like includes the number recited and refers to ranges which can be subsequently broken down into subranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

Moreover, the claims should not be read as limited to the provided order or elements unless stated to that effect. In addition, use of the terms "means for" in any claim is intended to invoke 35 U.S.C. §112, 6 or means-plus-function claim format, and any claim without the terms "means for" is not so intended.

A processor in association with software may be used to implement a radio frequency transceiver for use in a wireless transmit receive unit (WTRU), user equipment (UE), terminal, base station, Mobility Management Entity (MME) or Evolved Packet Core (EPC), or any host computer. The WTRU may be used in conjunction with modules, implemented in hardware and/or software including a Software Defined Radio (SDR), and other components such as a camera, a video camera module, a videophone, a speakerphone, a vibration device, a speaker, a microphone, a television transceiver, a hands free headset, a keyboard, a Bluetooth® module, a frequency modulated (FM) radio unit, a Near Field Communication (NFC) Module, a liquid crystal display (LCD) display unit, an organic light-emitting diode (OLED) display unit, a digital music player, a media player, a video game player module, an Internet browser, and/or any Wireless Local Area Network (WLAN) or Ultra Wide Band (UWB) module.

Although the invention has been described in terms of communication systems, it is contemplated that the systems may be implemented in software on microprocessors/general purpose computers (not shown). In certain embodiments, one or more of the functions of the various components may be implemented in software that controls a general-purpose computer.

In addition, although the invention is illustrated and described herein with reference to specific embodiments, the invention is not intended to be limited to the details shown. Rather, various modifications may be made in the details within the scope of the claims and without departing from the invention.

Throughout the disclosure, one of skill understands that certain representative embodiments may be used in the alternative or in combination with other representative embodiments.

**Claims**

**1.** A method implemented in a client device and comprising:

receiving a first plurality of packets from a server, the first plurality of packets carrying video frames of video content;

applying a first latency value to the first plurality of packets before decoding and displaying;

sending a request message to the server, the request message comprising first information indicating a requested latency value determined based on a frame pace variation, the frame pace variation being a variation of a pace at which the video frames are any of received, extracted from a receiver buffer and decoded;

receiving a response message from the server, the response message comprising second information indicating a second latency value; and

applying the second latency value to a second plurality of packets before decoding and displaying, the second plurality of packets being received subsequent to the first plurality of packets.

2. A client device comprising circuitry, including any of a transmitter, a receiver, a processor, and a memory, configured for:

receiving a first plurality of packets from a server, the first plurality of packets carrying video frames of video content;

applying a first latency value to the first plurality of packets before decoding and displaying;

sending a request message to the server, the request message comprising first information indicating a requested latency value determined based on a frame pace variation, the frame pace variation being a variation of a pace at which the video frames are any of received, extracted from a receiver buffer and decoded;

receiving a response message from the server, the response message comprising second information indicating a second latency value; and

applying the second latency value to a second plurality of packets before decoding and displaying, the second plurality of packets being received subsequent to the first plurality of packets.

3. The method of claim 1, or the client device of claim 2, wherein the first latency value, the requested latency value and the second latency value are respectively a first buffer latency value, a requested buffer latency value and a second buffer latency value.

4. The method of any of claims 1 and 3, or the client device of any of claims 2 to 3, wherein applying the first latency value and the second latency value to the first plurality of packets and the second plurality of packets, respectively, comprises extracting the first plurality of packets and the second plurality of packets from the receiver buffer based on (i) the first latency value and the second latency value, respectively, and (ii) time stamp information included in the first plurality of packets and the second plurality of packets, wherein the time stamp information indicates respective times associated with a storage of the first plurality of packets and the second plurality of packets in a sender buffer of the server.

5. The method or the client device of claim 4, wherein the time stamp information included in a packet of any of the first plurality of packets and the second plurality of packets indicates a first time at which the packet has been stored in the sender buffer, wherein the packet is extracted at a second time corresponding to an amount of time after the first time, wherein the amount of time is constant for successive packets and is associated with any of the first latency value and the second latency value.

6. The method of any of claims 1 and 3 to 5, or the client device of any of claims 2 to 5, wherein the requested latency value is based on any of a number of delayed frames and a number of dropped frames.

7. The method of any of claims 1 and 3 to 6, or the client device of any of claims 2 to 6, wherein the second latency value is applied to the second plurality of packets based on the second latency value being equal to the requested latency value or comprising a value between the requested latency value and the first latency value.

8. The method of any of claims 1 and 3 to 7. comprising, or the client device of any of claims 2 to 7 configured for sending a handshake request message to the server before receiving the first plurality of packets, wherein the handshake request message comprises third information indicating a client capability to support dynamic latency operation.

9. The method of claim 8 comprising or the client device of claim 8 configured for receiving a handshake response message from the server in response to the handshake request message, and performing dynamic latency operation by sending the request message on a condition that the handshake response message comprises fourth information indicating a server capability to support dynamic latency operation.

**10.** The method of any of claims 1 and 3 to 9 comprising, or the client device of any of claims 2 to 9 configured for receiving a handshake request message from the server before receiving the first plurality of packets , and on a condition that the handshake request message comprises third information indicating a server capability to support dynamic latency operation, sending a handshake response message to the server, wherein the handshake response message comprises fourth information indicating a client capability to support dynamic latency operation.

**11.** A method implemented in a server and comprising:

sending a first plurality of packets carrying first video frames of video content to a client device, wherein the first plurality of packets remain in a buffer for retransmission during a first amount of time associated with a first latency value;

receiving a request message from the client device, the request message comprising first information indicating a requested latency value;

sending a response message to the client device, the response message comprising second information indicating a second latency value; and

sending a second plurality of packets carrying second video frames of the video content to the client device, wherein the second plurality of packets are sent subsequent to the first plurality of packets, and wherein the second plurality of packets remain in the buffer for retransmission during a second amount of time associated with the second latency value.

**12.** A server comprising circuitry, including any of a transmitter, a receiver, a processor, and a memory, configured for:

- sending a first plurality of packets carrying first video frames of video content to a client device, wherein the first plurality of packets remain in a buffer for retransmission during a first amount of time associated with a first latency value;

- receiving a request message from the client device, the request message comprising first information indicating a requested latency value;

- sending a response message to the client device, the response message comprising second information indicating a second latency value; and

- sending a second plurality of packets carrying second video frames of the video content to the client device, wherein the second plurality of packets are sent subsequent to the first plurality of packets, and wherein the second plurality of packets remain in the buffer for retransmission during a second amount of time associated with the second latency value.

**13.** The method of claim 11 or the server of claim 12, wherein the first latency value, the requested latency value and the second latency value are respectively a first buffer latency value, a requested buffer latency value and a second buffer latency value.

**14.** The method of any of claims 11 and 13 comprising, or the server of any of claims 12 to 13 configured for receiving a handshake request message from the client device before receiving the first plurality of packets, wherein the handshake request message comprises third information indicating a client capability to support dynamic latency operation.

**Patentansprüche**

**1.** Verfahren, das in einer Client-Vorrichtung implementiert wird und umfasst:

Empfangen einer ersten Mehrzahl von Paketen von einem Server, wobei die erste Mehrzahl von Paketen Videoeinzelbilder von Videoinhalt übermitteln;

Anwenden eines ersten Latenzzeitwerts auf die erste Mehrzahl von Paketen vor dem Decodieren und Anzeigen;

Senden einer Anforderungsnachricht an den Server, wobei die Anforderungsnachricht erste Informationen, die einen auf der Grundlage einer Einzelbild-Geschwindigkeitsschwankung bestimmten angeforderten Latenzzeitwert angeben, umfasst, wobei die Einzelbild-Geschwindigkeitsschwankung eine Schwankung einer Geschwindigkeit, mit der die Videoeinzelbilder empfangen und von einem Empfängerpuffer ausgekoppelt und decodiert werden, ist;

Empfangen einer Antwortnachricht von dem Server, wobei die Antwortnachricht zweite Informationen, die einen zweiten Latenzzeitwert angeben, umfasst; und

Anwenden des zweiten Latenzzeitwerts auf eine zweite Mehrzahl von Paketen vor dem Decodieren und Anzeigen, wobei die zweite Mehrzahl von Paketen im Anschluss an die erste Mehrzahl von Paketen empfangen werden.

2. Client-Vorrichtung, die eine Schaltungsanordnung, die einen Sender und einen Empfänger und einen Prozessor und einen Speicher enthält, umfasst, wobei die Client-Vorrichtung konfiguriert ist zum:

Empfangen einer ersten Mehrzahl von Paketen von einem Server, wobei die erste Mehrzahl von Paketen Videoeinzelbilder von Videoinhalt übermitteln;
Anwenden eines ersten Latenzzeitwerts auf die erste Mehrzahl von Paketen vor dem Decodieren und Anzeigen;
Senden einer Anforderungsnachricht an den Server, wobei die Anforderungsnachricht erste Informationen, die einen auf der Grundlage einer Einzelbild-Geschwindigkeitsschwankung bestimmten angeforderten Latenzzeitwert angeben, umfasst, wobei die Einzelbild-Geschwindigkeitsschwankung eine Schwankung einer Geschwindigkeit, mit der die Videoeinzelbilder empfangen und von einem Empfängerpuffer ausgekoppelt und decodiert werden, ist;
Empfangen einer Antwortnachricht von dem Server, wobei die Antwortnachricht zweite Informationen, die einen zweiten Latenzzeitwert angeben, umfasst; und
Anwenden des zweiten Latenzzeitwerts auf eine zweite Mehrzahl von Paketen vor dem Decodieren und Anzeigen, wobei die zweite Mehrzahl von Paketen im Anschluss an die erste Mehrzahl von Paketen empfangen werden.

3. Verfahren nach Anspruch 1 oder Client-Vorrichtung nach Anspruch 2, wobei der erste Latenzzeitwert, der angeforderte Latenzzeitwert und der zweite Latenzzeitwert in dieser Reihenfolge ein erster Pufferlatenzzeitwert, ein angeforderter Pufferlatenzzeitwert und ein zweiter Pufferlatenzzeitwert sind.

4. Verfahren nach einem der Ansprüche 1 und 3 oder Client-Vorrichtung nach einem der Ansprüche 2 bis 3, wobei das Anwenden des ersten Latenzzeitwerts und des zweiten Latenzzeitwerts auf die erste Mehrzahl von Paketen bzw. auf die zweite Mehrzahl von Paketen das Auskoppeln der ersten Mehrzahl von Paketen und der zweiten Mehrzahl von Paketen aus dem Empfängerpuffer auf der Grundlage (i) des ersten Latenzzeitwerts bzw. des zweiten Latenzzeitwerts, und (ii) von Zeitstempelinformationen, die in der ersten Mehrzahl von Paketen und in der zweiten Mehrzahl von Paketen enthalten sind, umfasst, wobei die Zeitstempelinformationen jeweilige Zeitpunkte angeben, die einer Speicherung der ersten Mehrzahl von Paketen und der zweiten Mehrzahl von Paketen in einem Senderpuffer des Servers zugeordnet sind.

5. Verfahren oder Client-Vorrichtung nach Anspruch 4, wobei die Zeitstempelinformationen, die in einem Paket der ersten Mehrzahl von Paketen und der zweiten Mehrzahl von Paketen enthalten sind, einen ersten Zeitpunkt, zu dem das Paket in dem Senderpuffer gespeichert worden ist, angeben, wobei das Paket zu einem zweiten Zeitpunkt, der einer Zeitdauer nach dem ersten Zeitpunkt entspricht, ausgekoppelt wird, wobei die Zeitdauer für aufeinanderfolgende Pakete konstant ist und dem ersten Latenzzeitwert und dem zweiten Latenzzeitwert zugeordnet ist.

6. Verfahren nach einem der Ansprüche 1 und 3 bis 5 oder Client-Vorrichtung nach einem der Ansprüche 2 bis 5, wobei der angeforderte Latenzzeitwert auf einer Anzahl verzögerter Einzelbilder und auf einer Anzahl verworfener Einzelbilder beruht.

7. Verfahren nach einem der Ansprüche 1 und 3 bis 6 oder Client-Vorrichtung nach einem der Ansprüche 2 bis 6, wobei der zweite Latenzzeitwert auf die zweite Mehrzahl von Paketen auf der Grundlage dessen angewendet wird, dass der zweite Latenzzeitwert gleich dem angeforderten Latenzzeitwert ist oder einen Wert zwischen dem angeforderten Latenzzeitwert und dem ersten Latenzzeitwert umfasst.

8. Verfahren nach einem der Ansprüche 1 und 3 bis 7, das umfasst, oder Client-Vorrichtung nach einem der Ansprüche 2 bis 7, die konfiguriert ist zum Senden einer Quittierungsanforderungsnachricht an den Server vor Empfangen der ersten Mehrzahl von Paketen, wobei die Quittierungsanforderungsnachricht dritte Informationen, die eine Client-Fähigkeit zum Unterstützen eines Betriebs mit dynamischen Latenzzeiten angeben, umfasst.

9. Verfahren nach Anspruch 8, das umfasst, oder Client-Vorrichtung nach Anspruch 8, die konfiguriert ist zum Empfangen einer Quittierungsantwortnachricht von dem Server als Reaktion auf die Quittierungsanforderungsnachricht und zum Ausführen eines Betriebs mit dynamischen Latenzzeiten durch Senden der Anforderungsnachricht unter einer Bedingung, dass die Quittierungsantwortnachricht vierte Informationen, die eine Server-Fähigkeit zum Unterstützen des Betriebs mit dynamischen Latenzzeiten angeben, umfasst.

10. Verfahren nach einem der Ansprüche 1 und 3 bis 9, das umfasst, oder Client-Vorrichtung nach einem der Ansprüche 2 bis 9, die konfiguriert ist zum Empfangen einer Quittierungsanforderungsnachricht von dem Server vor Empfangen der ersten Mehrzahl von Paketen und unter einer Bedingung, dass die Quittierungsanforderungsnachricht dritte Informationen, die eine Server-Fähigkeit zum Unterstützen des Betriebs mit dynamischen Latenzzeiten angeben, umfasst, Senden einer Quittierungsantwortnachricht an den Server, wobei die Quittierungsantwortnachricht vierte Informationen, die eine Client-Fähigkeit zum Unterstützen des Betriebs mit dynamischen Latenzzeiten angeben, umfasst.

11. Verfahren, das in einem Server implementiert wird und umfasst:

Senden einer ersten Mehrzahl von Paketen, die erste Videoeinzelbilder von Videoinhalt übermitteln, an eine Client-Vorrichtung, wobei die erste Mehrzahl von Paketen während einer ersten Zeitdauer, die einem ersten Latenzzeitwert zugeordnet ist, zur erneuten Sendung in einem Puffer bleiben;
Empfangen einer Anforderungsnachricht von der Client-Vorrichtung, wobei die Anforderungsnachricht erste Informationen, die einen angeforderten Latenzzeitwert angeben, umfasst;
Senden eine Antwortnachricht an die Client-Vorrichtung, wobei die Antwortnachricht zweite Informationen, die einen zweiten Latenzzeitwert angeben, umfasst; und
Senden einer zweiten Mehrzahl von Paketen, die zweite Videoeinzelbilder des Videoinhalts übermitteln, an die Client-Vorrichtung, wobei die zweite Mehrzahl von Paketen im Anschluss an die erste Mehrzahl von Paketen gesendet werden und wobei die zweite Mehrzahl von Paketen zur erneuten Sendung während einer zweiten Zeitdauer, die dem zweiten Latenzzeitwert zugeordnet ist, in dem Puffer bleiben.

12. Server, der eine Schaltungsanordnung, die einen Sender und einen Empfänger und einen Prozessor und einen Speicher enthält, umfasst, wobei der Server konfiguriert ist zum:

- Senden einer ersten Mehrzahl von Paketen, die erste Videoeinzelbilder von Videoinhalt übermitteln, an eine Client-Vorrichtung, wobei die erste Mehrzahl von Paketen während einer ersten Zeitdauer, die einem ersten Latenzzeitwert zugeordnet ist, zur erneuten Sendung in einem Puffer bleiben;
- Empfangen einer Anforderungsnachricht von der Client-Vorrichtung, wobei die Anforderungsnachricht erste Informationen, die einen angeforderten Latenzzeitwert angeben, umfasst;
- Senden eine Antwortnachricht an die Client-Vorrichtung, wobei die Antwortnachricht zweite Informationen, die einen zweiten Latenzzeitwert angeben, umfasst; und
- Senden einer zweiten Mehrzahl von Paketen, die zweite Videoeinzelbilder des Videoinhalts übermitteln, an die Client-Vorrichtung, wobei die zweite Mehrzahl von Paketen im Anschluss an die erste Mehrzahl von Paketen gesendet werden und wobei die zweite Mehrzahl von Paketen zur erneuten Sendung während einer zweiten Zeitdauer, die dem zweiten Latenzzeitwert zugeordnet ist, in dem Puffer bleiben.

13. Verfahren nach Anspruch 11 oder Server nach Anspruch 12, wobei der erste Latenzzeitwert, der angeforderte Latenzzeitwert und der zweite Latenzzeitwert in dieser Reihenfolge ein erster Pufferlatenzzeitwert, ein angeforderter Pufferlatenzzeitwert und ein zweiter Pufferlatenzzeitwert sind.

14. Verfahren nach einem der Ansprüche 11 und 13, das umfasst, oder Server nach einem der Ansprüche 12 bis 13, der konfiguriert ist zum Empfangen einer Quittierungsanforderungsnachricht von der Client-Vorrichtung vor Empfangen der ersten Mehrzahl von Paketen, wobei die Quittierungsanforderungsnachricht dritte Informationen, die eine Client-Fähigkeit zum Unterstützen eines Betriebs mit dynamischen Latenzzeiten angeben, umfasst.

**Revendications**

1. Procédé mis en œuvre dans un dispositif client et comprenant :

la réception d'une première pluralité de paquets en provenance d'un serveur, la première pluralité de paquets transportant des trames vidéo de contenu vidéo ;
l'application d'une première valeur de latence à la première pluralité de paquets avant décodage et affichage ;
l'envoi d'un message de demande au serveur, le message de demande comprenant des premières informations indiquant une valeur de latence demandée d'après une variation du rythme de trame, la variation du rythme de trame étant une variation du rythme auquel les trames vidéo sont reçues, extraites d'un tampon de réception ou décodées ;

la réception d'un message de réponse du serveur, le message de réponse comprenant des deuxièmes informations indiquant une deuxième valeur de latence ; et

l'application de la deuxième valeur de latence à une deuxième pluralité de paquets avant décodage et affichage, la deuxième pluralité de paquets étant reçue après la première pluralité de paquets.

2. Dispositif client comprenant des circuits, incluant l'un quelconque d'un émetteur, d'un récepteur, d'un processeur et d'une mémoire, configurés pour :

recevoir une première pluralité de paquets en provenance d'un serveur, la première pluralité de paquets transportant des trames vidéo de contenu vidéo ;

appliquer une première valeur de latence à la première pluralité de paquets avant décodage et affichage ;

envoyer un message de demande au serveur, le message de demande comprenant des premières informations indiquant une valeur de latence demandée d'après une variation du rythme de trame, la variation du rythme de trame étant une variation du rythme auquel les trames vidéo sont reçues, extraites d'un tampon de réception ou décodées ;

recevoir un message de réponse du serveur, le message de réponse comprenant des deuxièmes informations indiquant une deuxième valeur de latence ; et

appliquer la deuxième valeur de latence à une deuxième pluralité de paquets avant décodage et affichage, la deuxième pluralité de paquets étant reçue après la première pluralité de paquets.

3. Procédé selon la revendication 1, ou dispositif client selon la revendication 2, dans lequel la première valeur de latence, la valeur de latence demandée et la deuxième valeur de latence sont respectivement une première valeur de latence de tampon, une valeur de latence de tampon demandée et une deuxième valeur de latence de tampon.

4. Procédé selon l'une quelconque des revendications 1 et 3, ou dispositif client selon l'une quelconque des revendications 2 à 3, dans lequel l'application de la première valeur de latence et de la deuxième valeur de latence à la première pluralité de paquets et à la deuxième pluralité de paquets, respectivement, comprend l'extraction de la première pluralité de paquets et de la deuxième pluralité de paquets du tampon de réception sur la base (i) de la première valeur de latence et de la deuxième valeur de latence, respectivement, et (ii) des informations d'horodatage incluses dans la première pluralité de paquets et la deuxième pluralité de paquets, où les informations d'horodatage indiquent les heures respectives associées à un stockage de la première pluralité de paquets et de la deuxième pluralité de paquets dans un tampon d'émission du serveur.

5. Procédé ou dispositif client selon la revendication 4, dans lequel les informations d'horodatage incluses dans un paquet de l'une quelconque de la première pluralité de paquets et de la deuxième pluralité de paquets indiquent une première heure à laquelle le paquet a été stocké dans le tampon d'émission, où le paquet est extrait à une deuxième heure correspondant à une certaine durée après la première heure, où la durée est constante pour les paquets successifs et est associée à l'une quelconque de la première valeur de latence et de la deuxième valeur de latence.

6. Procédé selon l'une quelconque des revendications 1 et 3 à 5, ou dispositif client selon l'une quelconque des revendications 2 à 5, dans lequel la valeur de latence demandée est basée sur l'un quelconque d'un nombre de trames retardées et d'un nombre de trames abandonnées.

7. Procédé selon l'une quelconque des revendications 1 et 3 à 6, ou dispositif client selon l'une quelconque des revendications 2 à 6, dans lequel la deuxième valeur de latence est appliquée à la deuxième pluralité de paquets en se basant sur le fait que la deuxième valeur de latence est égale à la valeur de latence demandée ou comprend une valeur comprise entre la valeur de latence demandée et la première valeur de latence.

8. Procédé selon l'une quelconque des revendications 1 et 3 à 7 comprenant, ou dispositif selon l'une quelconque des revendications 2 à 7 configuré pour, l'envoi d'un message de demande d'établissement de liaison au serveur avant la réception de la première pluralité de paquets, dans lequel le message de demande d'établissement de liaison comprend des troisièmes informations indiquant une capacité du client à prendre en charge l'opération de latence dynamique.

9. Procédé selon la revendication 8 comprenant, ou dispositif client selon la revendication 8 configuré pour, la réception d'un message de réponse d'établissement de liaison du serveur en réponse au message de demande d'établissement de liaison, et l'exécution d'une opération de latence dynamique par l'envoi du message de demande à condition que le message de réponse d'établissement de liaison comprenne des quatrièmes informations indiquant une capacité du serveur à prendre en charge l'opération de latence dynamique.

10. Procédé selon l'une quelconque des revendications 1 et 3 à 9 comprenant, ou dispositif client selon l'une quelconque des revendications 2 à 9 configuré pour, la réception d'un message de demande d'établissement de liaison du serveur avant la réception de la première pluralité de paquets, et à condition que le message de demande d'établissement de liaison comprenne des troisièmes informations indiquant une capacité du serveur à prendre en charge l'opération de latence dynamique, l'envoi d'un message de réponse d'établissement de liaison au serveur, où le message de réponse d'établissement de liaison comprend des quatrièmes informations indiquant une capacité du client à prendre en charge l'opération de latence dynamique.

11. Procédé mis en œuvre dans un serveur et comprenant :

l'envoi d'une première pluralité de paquets transportant des premières trames vidéo de contenu vidéo à un dispositif client, où la première pluralité de paquets reste dans un tampon pour retransmission pendant une première durée associée à une première valeur de latence ;
la réception d'un message de demande du dispositif client, le message de demande comprenant des premières informations indiquant une valeur de latence demandée ;
l'envoi d'un message de réponse au dispositif client, le message de réponse comprenant des deuxièmes informations indiquant une deuxième valeur de latence ; et
l'envoi d'une deuxième pluralité de paquets transportant des deuxièmes trames vidéo du contenu vidéo au dispositif client, où la deuxième pluralité de paquets est envoyée après la première pluralité de paquets, et où la deuxième pluralité de paquets reste dans le tampon pour retransmission pendant une deuxième durée associée à la deuxième valeur de latence.

12. Serveur comprenant des circuits, incluant l'un quelconque d'un émetteur, d'un récepteur, d'un processeur et d'une mémoire, configurés pour :

- envoyer une première pluralité de paquets transportant des premières trames vidéo de contenu vidéo à un dispositif client, où la première pluralité de paquets reste dans un tampon pour retransmission pendant une première durée associée à une première valeur de latence ;
- recevoir un message de demande du dispositif client, le message de demande comprenant des premières informations indiquant une valeur de latence demandée ;
- envoyer un message de réponse au dispositif client, le message de réponse comprenant des deuxièmes informations indiquant une deuxième valeur de latence ; et
- envoyer une deuxième pluralité de paquets transportant des deuxièmes trames vidéo du contenu vidéo au dispositif client, où la deuxième pluralité de paquets est envoyée après la première pluralité de paquets, et où la deuxième pluralité de paquets reste dans le tampon pour retransmission pendant une deuxième durée associée à la deuxième valeur de latence.

13. Procédé selon la revendication 11, ou serveur selon la revendication 12, dans lequel la première valeur de latence, la valeur de latence demandée et la deuxième valeur de latence sont respectivement une première valeur de latence de tampon, une valeur de latence de tampon demandée et une deuxième valeur de latence de tampon.

14. Procédé selon l'une quelconque des revendications 11 et 13 comprenant, ou serveur selon l'une quelconque des revendications 12 à 13 configuré pour, la réception d'un message de demande d'établissement de liaison du dispositif client avant la réception de la première pluralité de paquets, dans lequel le message de demande d'établissement de liaison comprend des troisièmes informations indiquant une capacité du client à prendre en charge une opération de latence dynamique.

Figure 1

Figure 2

Figure 3

Figure 4

Figure 4(Continued)

EP 4 313 336 B1

Figure 5

Figure 6A

Figure 6B

EP 4 313 336 B1

Figure 7

## HSv4 SRT Extended Handshake (HS) Packet

| 1 | Type=0x7fff | Ext {HSREQ(1),HSRP(2)} |
|---|---|---|
| Additional Info = Undefined | | |
| Time Stamp (µsec ) | | |
| Destination Socket ID | | |
| SRT Version {<10300h} | | |
| SRT Flags | | |
| TsbPd Resv = 0 | TsbPdDelay {20..8000} | |
| Reserved = 0 | | |
| | | |
| | | |

810

### SRT Flags value:

(0) SRT_OPT_TSBPDSND
(1) SRT_OPT_TSBPDRCV
(2) SRT_OPT_HAICRYPT
(3) SRT_OPT_TLPKTDROP
(4) SRT_OPT_NAKREPORT
(5) SRT_OPT_REXMITFLG
(6) SRT_OPT_STREAM
(7) SRT_OPT_DYNTSBPD

## HSv5 SRT Extended Handshake (HS) Packet

820

| Ext Type=SRT_CMD_HSREQ(1) | | | | Ext Size (3) | | |
|---|---|---|---|---|---|---|
| SRT Version {>=10300h} | | | | | | |
| Time Stamp (µsec ) | | | | | | |
| SRT Flags | | | | | | |
| TsbPd Resv = 0 | | | TsbPdDelay {20..8000} | | | |
| Ext Type=SRT_CMD_KMREQ(3) | | | | Ext Size (bytes/4) | | |
| 0 | V {1} | PT {2} | Sign {2029h} | | Resv {0} | KK |
| KEKI {0} | | | | | | |
| Cipher {2} | | Auth {0} | SE {2} | | Resv1 {0} | |
| Recv2 {2} | | | Slen(bytes)/4 {4} | | Klen(bytes)/4 {4,6,8} | |
| Salt[Slen] | | | | | | |
| Wrap[({KK+1/2}*Klen) + 8] ... | | | | | | |

EP 4 313 336 B1

# Figure 8A

3.2.1.1.1. Handshake Extension Message Flags

| Bitmask | Flag |
|---|---|
| 0x00000001 | TSBPDSND |
| 0x00000002 | TSBPDRCV |
| 0x00000004 | CRYPT |
| 0x00000008 | TLPKTDROP |
| 0x00000010 | PERIODICNAK |
| 0x00000020 | REXMITFLG |
| 0x00000040 | STREAM |
| 0x00000080 | PACKET_FILTER |

Table 6: Handshake Extension Message Flags

# Figure 8B

Game Executable | Video Capture/Encoder | SRT Caller/Sender | Network (WAN) | SRT Listener/Receiver | Latency Manager | Decoder | Renderer | User

Session initialization

**90A**

Launch Game Session

Example 0

Caller may Initiate Extended Handshake with the Flag and Listener may Accept

901A — Extended Handshake Request (Flag = SRT_OPT_DYNTSBPD)

902A — Extended Handshake Response (Flag = SRT_OPT_DYNTSBPD)

**91A**

Example 1

Caller may Initiate Extended Handshake with no Flag and Listener may Indicate it may Activate it

911A — Extended Handshake Request (No Flag <> SRT_OPT_DYNTSBPD)

912A — Extended Handshake Response (Flag = SRT_OPT_DYNTSBPD)

Caller may Confirm it can't Activate and Listener may Accept

913A — Extended Handshake Request (No Flag <> SRT_OPT_DYNTSBPD)

914A — Extended Handshake Response (No Flag <> SRT_OPT_DYNTSBPD)

**92A**

Example 2

Caller may Initiate Extended Handshake with no Flag and Listener may Indicate it may Activate it

921A — Extended Handshake Request (No Flag <> SRT_OPT_DYNTSBPD)

922A — Extended Handshake Response (Flag = SRT_OPT_DYNTSBPD)

Caller may Activate it and Listener may Confirm

923A — Extended Handshake Request (Flag = SRT_OPT_DYNTSBPD)

924A — Extended Handshake Response (Flag = SRT_OPT_DYNTSBPD)

## Figure 9A

EP 4 313 336 B1

Figure 9B

EP 4 313 336 B1

EP 4 313 336 B1

1010 ⟶

| 1 | Type= DYNTSBPDREQ{9} | Reserved |
|---|---|---|
| Additional Info: undefined | | |
| Time Stamp(usec) | | |
| Destination Socket ID | | |
| TsbPd Snd{20..8000} | | TsbPd Rcv{20..8000} |

1012    1011

1020 ⟶

| 1 | Type= DYNTSBPDRESP{10} | Reserved |
|---|---|---|
| Additional Info: undefined | | |
| Time Stamp(usec) | | |
| Destination Socket ID | | |
| TsbPd Snd{20..8000} | | TsbPd Rcv{20..8000} |

1022    1021

# Figure 10

Figure 11A

EP 4 313 336 B1

Figure 11A(Continued)

Figure 11B

EP 4 313 336 B1

Figure 11B(Continued)

Figure 12A

Figure 12C

Figure 12B

Receiving a Plurality of Packets Carrying
VIdeo Frames of a Game from a Server ⟶1310

Applying an Initial SRT Latency Value to the Received
Packets before Decoding and Displaying ⟶1320

Obtaining a Value of a Metric Representative of a
Video Stuttering Level Based on a Video Frame Pace Variation ⟶1330

Exchanging SRT Messages between a Client Device and a Server for
Obtaining a New SRT Latency Value Based on the Value of the Metric ⟶1340

Improving a QoE of the Game by Applying the New Latency Value to
Received Subsequent Packets before Decoding and Displaying ⟶1350

# Figure 13

Receiving a Plurality of Packets Carrying
VIdeo Frames of Video Content from a Server | 1410

Applying an Initial Latency Value to the Received
Packets before Decoding and Displaying | 1420

Sending a Request Message to the Server, the Request Message
Comprising First Information Indicating a Requested Latency Value
Determined Based on a Frame Pace Variation | 1430

Receiving a Response Message from the Server, the Response
Message Comprising Second Information Indicating a New Latency
Value | 1440

Applying the New Latency Value to Received Subsequent Packets
before Decoding and Displaying | 1450

Figure 14

Sending a Plurality of Packets Carrying
VIdeo Frames of Video Content to a Client Device ⌐1510

Keeping the Packets in a Buffer for Retransmission during a First
Amount of Time Associated with an Initial Latency Value ⌐1520

Receiving a Request Message from the Client Device, the Request
Message Comprising First Information Indicating a Requested Latency
Value ⌐1530

Sending a Response Message to the Client Device, the Response
Message Comprising Second Information Indicating a New Latency
Value ⌐1540

Sending a Plurality of Subsequent Packets Carrying Subsequent Video
Frames of the Video Content to the Client Device ⌐1550

Keeping the Subsequent Packets in the Buffer for Retransmission
During a Second Amount of Time Associated with the New Latency
Value ⌐1560

# Figure 15

Receiving a Plurality of Packets Carrying
VIdeo Frames of Video Content from a Server ⟋‾1610

Applying an Initial Latency Value to the Received
Packets before Decoding and Displaying ⟋‾1620

Sending Information to the Server, the Information Indicating a Metric
Representative of a Frame Pace Variation ⟋‾1630

Receiving a Request Message from the Server, the Request Message
Comprising First Information Indicating a Requested Latency Value ⟋‾1640

Sending a Response Message to the Server, the Response Message
Comprising Second Information Indicating a New Latency Value Based
on the Requested Latency Value ⟋‾1650

Applying the New Latency Value to Received Subsequent Packets
before Decoding and Displaying ⟋‾1660

# Figure 16

Sending a Plurality of Packets Carrying
VIdeo Frames of Video Content to a Client Device ⎯⎯1710

Keeping the Packets in a Buffer for Retransmission during a First
Amount of Time Associated with an Initial Latency Value ⎯⎯1720

Receiving Information Indicating a Metric Representative of a Frame
Pace Variation ⎯⎯1730

Sending a Request Message to the Client Device, the Request
Message Comprising First Information Indicating a Requested Latency
Value Determined Based on the Indicated Metric ⎯⎯1740

Receiving a Response Message from the Client Device, the Response
Message Comprising Second Information Indicating a New Latency
Value ⎯⎯1750

Sending a Plurality of Subsequent Packets Carrying Subsequent Video
Frames of the Video Content to the Client Device ⎯⎯1760

Keeping the Subsequent Packets in the Buffer for Retransmission
During a Second Amount of Time Associated with the New Latency
Value ⎯⎯1770

# Figure 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Adaptive Resource Management for Analyzing Video Streams from Globally Distributed Network Cameras. **MOHAN ANUP et al.** IEEE TRANSACTIONS ON CLOUD COMPUTING. IEEE COMPUTER SO-CIETY, 15 May 2018, vol. 9